(19) Europäisches Patentamt
European Patent Office
Office européen des brevets

(11) **EP 4 669 000 A1**

(12) **EUROPEAN PATENT APPLICATION**
published in accordance with Art. 153(4) EPC

(43) Date of publication:
**24.12.2025 Bulletin 2025/52**

(21) Application number: **23921979.3**

(22) Date of filing: **17.02.2023**

(51) International Patent Classification (IPC):
**H04W 72/542** (2023.01)

(52) Cooperative Patent Classification (CPC):
**H04W 72/542**

(86) International application number:
**PCT/CN2023/076838**

(87) International publication number:
**WO 2024/168830 (22.08.2024 Gazette 2024/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **FUJITSU LIMITED
Kawasaki-shi, Kanagawa 211-8588 (JP)**

(72) Inventors:
• **LU, Yiwen
  Beijing 100022 (CN)**
• **ZHANG, Jian
  Beijing 100022 (CN)**
• **ZHANG, Lei
  Beijing 100022 (CN)**
• **WANG, Xin
  Beijing 100022 (CN)**

(74) Representative: **Haseltine Lake Kempner LLP
Cheapside House
138 Cheapside
London EC2V 6BJ (GB)**

(54) **METHOD AND APPARATUS FOR SENDING AND RECEIVING CHANNEL STATE INFORMATION, AND COMMUNICATION SYSTEM**

(57) The embodiments of the present application provide a method and apparatus for sending and receiving channel state information, and a communication system. The apparatus is applied to a terminal device. The apparatus comprises: a first receiver, for receiving a first channel-state information reference signal (CSIRS) resource configuration from a network device, wherein the first CSIRS resource configuration at least comprises a first resource set, the first resource set comprises K CSIRS resources, and K is a natural number greater than or equal to 2; and a first processor, for determining a CSI reporting priority at least on the basis of first channel state information part 1 (CSI part I) reporting domain information and/or second CSI part I reporting domain information, wherein the first CSI part I reporting domain information is used for determining K resource selection results, the second CSI Part I reporting domain information is used for determining a spatial domain beam selection result, and the first processor further generates CSI at least according to the CSI reporting priority.

FIG. 5

**Description**

Technical Field

This disclosure relates to the field of communication technologies.

Background

In a New Radio (NR) system, users may measure a current channel according to channel state information (CSI) resource settings and CSI reporting settings configured by a network device side, and carry the channel state information by uplink control information (UCI) in an uplink channel (such as a physical uplink control channel PUCCH, a physical uplink shared channel PUSCH) for reporting feedback.

The multiple transmission reception point (M-TRP) cooperative transmission scheme is an important technology in NR systems to improve the throughput of cell edge usage and provide more balanced service quality for serving cells. The M-TRP transmission scheme can be roughly divided into two types: a coherent joint transmission (C-JT) scheme and an incoherent joint transmission (NC-JT) scheme. The specific implementation difference between the two is reflected in the different mapping relationships from layers to multiple TRPs. For the C-JT scheme, all physical downlink shared channel/demodulation reference signals (PDSCH/DMRS) ports jointly transmitted from multiple transmission points (TRPs) and signals from multiple TRPs are coherently transmitted; For the NC-JT scheme, the PDSCH/DMRS ports are transmitted separately from each TRP.

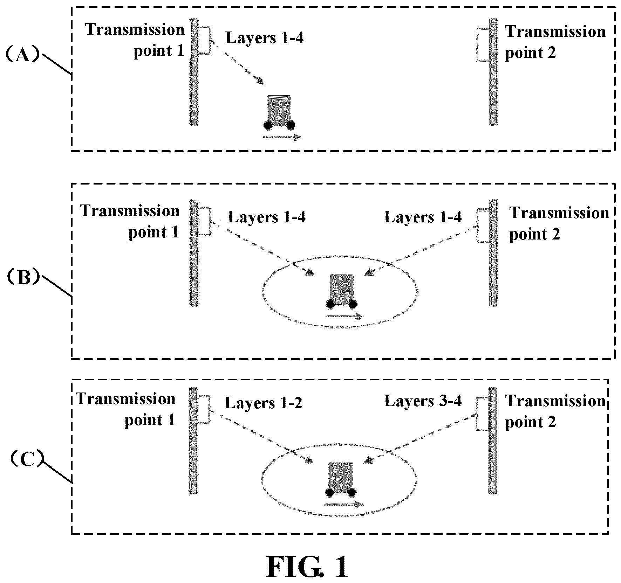

FIG. 1 is a schematic diagram of single point transmission, coherent joint transmission and incoherent joint transmission. A in FIG. 1 corresponds to single point transmission, B in FIG. 1 corresponds to C-JT transmission, and C in FIG. 1 corresponds to NC-JT.

In Rel-15/16, users report CSI based on the single transmission reception point (S-TRP) scheme, which includes precoding matrix indication (PMI), rank indicator (RI), layer indication (LI), channel quality indication (CQI), etc. Rel-17 supports enhanced CSI resource allocation and reporting for NC-JT scheme. Terminal devices can perform joint channel measurements based on reference signals transmitted from M transmission points based on NC-JT transmission, and report M PMIs, M RIs, M LIs, and N CQIs (single codeword N = 1, double codeword N = 2), etc. And currently only supports CSI reporting based on the 'typeI single-panel' codebook configuration.

When coherent joint transmission occurs, each data layer is mapped onto multiple TRP/panels participating in cooperation through weighted vectors, which is equivalent to concatenating multiple sub-arrays into a higher dimensional virtual array. Therefore, the C-JT transmission scheme may achieve higher shaping/precoding/multiplexing gains and significantly improve the throughput of edge users and the average throughput of the cell.

It should be noted that the above description of the background is merely provided for clear and complete explanation of this disclosure and for easy understanding by those skilled in the art. And it should not be understood that the above technical solution is known to those skilled in the art as it is described in the background of this disclosure.

Summary

According to the data/reference signal transmission and mapping characteristics in the CJT transmission scheme, the terminal equipment needs to perform joint channel measurement based on the reference signals transmitted by K multiple transmission points based on C-JT transmission, and jointly feedback single CSI information such as PMI, RI, LI, CQI, etc.

However, the current CSI feedback mechanism of Rel-15~Rel-17 standards cannot be applied to the CSI feedback of C-JT transmission schemes. That is, the CSI feedback from terminal devices cannot accurately and completely reflect the true channel quality experienced by the resource ports of C-JT, thereby reducing the accuracy and reliability of data scheduling, resulting in a decrease in data transmission performance, single user and overall network throughput.

For example, part I reporting domain information and bitwidth in a CSI reporting domain based on CJT joint transmission are not specified in the related art. Therefore, a network device is unable to accurately receive and demodulate part I information based on a joint coherent transmission scheme. For another example, when the terminal equipment receives all Part I information based on a joint coherent transmission scheme, as no a part I information reporting priority is defined, when a bit rate is greater than a configured maximum bit rate, the network device is unable to define determination of information omission according to the priority, resulting in that a part of information of CSI is unable to be correctly received and demodulated, which greatly affects accuracy and completeness of measurement reporting, and is unable to ensure data transmission performances.

In order to solve at least one of the above problems or other similar problems, the embodiments of this disclosure provide methods and apparatuses for transmitting and receiving channel state information and a communication system, in which CSI reporting priorities determined according to first CSI part I reporting domain information and/or second CSI part I reporting domain information. Hence, the network device may correctly receive and demodulate the received CSI, thereby improving accuracy and completeness of measurement reporting, and ensuring data transmission performances.

According to one aspect of the embodiments of this disclosure, there is provided an apparatus for transmitting channel state information, applicable to a terminal equipment, the apparatus including:

a first receiver configured to receive first channel state information reference signal (CSI-RS) resource configuration from a network device, the first CSI-RS resource configuration at least including a first resource set, the first resource set including K CSI-RS resources, where, K is a natural number greater than or equal to 2; and
a first processor configured to determine CSI reporting priorities at least based on first channel state information part I (CSI part I) reporting domain information and/or second CSI part I reporting domain information, the first CSI part I reporting domain information being used to determine K CSI-RS resource selection results, and the second CSI part I reporting domain information being used to determine a spatial domain beam selection result,
the first processor further generating CSI at least according to the CSI reporting priorities.

According to another aspect of the embodiments of this disclosure, there is provided an apparatus for receiving channel state information, applicable to a network device, the apparatus including:

a second transmitter configured to transmit first channel state information reference signal (CSI-RS) resource configuration to a terminal equipment, the first CSI-RS resource configuration at least including a first resource set, the first resource set including K CSI-RS resources, where, K is a natural number greater than or equal to 2; and
a second receiver configured to receive CSI generated by the terminal equipment based on CSI reporting priorities, wherein the CSI reporting priorities are determined at least based on first channel state information part I (CSI part I) reporting domain information and/or second CSI part I reporting domain information, the first CSI part I reporting domain information being used to determine K CSI-RS resource selection results, and the second CSI part I reporting domain information being used to determine a spatial domain beam selection result.

An advantage of the embodiments of this disclosure exists in that through determining CSI reporting priorities according to first CSI part I reporting domain information and/or second CSI part I reporting domain information, hence, the network device may correctly receive and demodulate the received CSI, thereby improving accuracy and completeness of measurement reporting, and ensuring data transmission performances.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the spirits and scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprise/include" when used in this specification is taken to specify the presence of stated features, integers, steps or components but does not preclude the presence or addition of one or more other features, integers, steps, components or groups thereof.

Brief Description of the Drawings

Elements and features depicted in one drawing or embodiment of the invention may be combined with elements and features depicted in one or more additional drawings or embodiments. Moreover, in the drawings, like reference numerals designate corresponding parts throughout the several views and may be used to designate like or similar parts in more than one embodiment.

FIG. 1 is a schematic diagram of single point transmission, coherent joint transmission and incoherent joint transmission;
FIG. 2 is a schematic diagram of a communication system of this disclosure;
FIG. 3 is a schematic diagram of decoupling by an NR system according to CSI measurement and CSI feedback;
FIG. 4 is a schematic diagram of the method for transmitting channel state information of embodiments of a first aspect;
FIG. 5 is a schematic diagram of the method for receiving channel state information of embodiments of a second aspect;
FIG. 6 is a schematic diagram of the apparatus for transmitting channel state information of embodiments of a third aspect;

FIG. 7 is a schematic diagram of the apparatus for receiving channel state information of embodiments of a fourth aspect;

FIG. 8 is a schematic diagram of the terminal equipment of embodiments of a fifth aspect of this disclosure; and

FIG. 9 is a schematic diagram of the network device of embodiments of a fifth aspect of this disclosure.

Detailed Description of the Disclosure

These and further aspects and features of this disclosure will be apparent with reference to the following description and attached drawings. In the description and drawings, particular embodiments of the invention have been disclosed in detail as being indicative of some of the ways in which the principles of the invention may be employed, but it is understood that the invention is not limited correspondingly in scope. Rather, the invention includes all changes, modifications and equivalents coming within the spirit and terms of the appended claims.

In the embodiments of this disclosure, terms "first", and "second", etc., are used to differentiate different elements with respect to names, and do not indicate spatial arrangement or temporal orders of these elements, and these elements should not be limited by these terms. Terms "and/or" include any one and all combinations of one or more relevantly listed terms. Terms "contain", "include" and "have" refer to existence of stated features, elements, components, or assemblies, but do not exclude existence or addition of one or more other features, elements, components, or assemblies.

In the embodiments of this disclosure, single forms "a", and "the", etc., include plural forms, and should be understood as "a kind of" or "a type of" in a broad sense, but should not defined as a meaning of "one"; and the term "the" should be understood as including both a single form and a plural form, except specified otherwise. Furthermore, the term "according to" should be understood as "at least partially according to", the term "based on" should be understood as "at least partially based on", except specified otherwise.

In the embodiments of this disclosure, the term "communication network" or "wireless communication network" may refer to a network satisfying any one of the following communication standards: long term evolution (LTE), long term evolution-advanced (LTE-A), wideband code division multiple access (WCDMA), and high-speed packet access (HSPA), etc.

And communication between devices in a communication system may be performed according to communication protocols at any stage, which may, for example, include but not limited to the following communication protocols: 1G (generation), 2G, 2.5G, 2.75G, 3G, 4G, 4.5G, 5G and new radio (NR), etc., and/or other communication protocols that are currently known or will be developed in the future.

In the embodiments of this disclosure, the term "network device", for example, refers to a device in a communication system that accesses a user equipment to the communication network and provides services for the user equipment. The network device may include but not limited to the following devices: an integrated access and backhaul node (IAB node), a base station (BS), an access point (AP), a transmission reception point (TRP), a broadcast transmitter, a mobile management entity (MME), a gateway, a server, a radio network controller (RNC), a base station controller (BSC), etc.

The base station may include but not limited to a node B (NodeB or NB), an evolved node B (eNodeB or eNB), and a 5G base station (gNB), etc. Furthermore, it may include a remote radio head (RRH), a remote radio unit (RRU), a relay, or a low-power node (such as a femto, and a pico, etc.). The term "base station" may include some or all of its functions, and each base station may provide communication coverage for a specific geographical area. And a term "cell" may refer to a base station and/or its coverage area, depending on a context of the term.

In the embodiments of this disclosure, the term "user equipment (UE)" or "terminal equipment (TE) or terminal device" refers to, for example, an equipment accessing to a communication network and receiving network services via a network device. The user equipment may be fixed or mobile, and may also be referred to as a mobile station (MS), a terminal, a subscriber station (SS), an access terminal (AT), or a station, etc.

The terminal equipment may include but not limited to the following devices: a cellular phone, a personal digital assistant (PDA), a wireless modem, a wireless communication device, a hand-held device, a machine-type communication device, a lap-top, a cordless telephone, a smart cell phone, a smart watch, and a digital camera, etc.

For another example, in a scenario of the Internet of Things (IoT), etc., the terminal equipment may also be a machine or a device performing monitoring or measurement. For example, it may include but not limited to a machine-type communication (MTC) terminal, a vehicle mounted communication terminal, an industrial wireless device, a surveillance camera, a device to device (D2D) terminal, and a machine to machine (M2M) terminal, etc.

Moreover, the term "network side" or "network device side" refers to a side of a network, which may be a base station or one or more network devices including those described above. The term "user side" or "terminal side" or "terminal equipment side" refers to a side of a user or a terminal, which may be a UE, and may include one or more terminal equipments described above.

In the following description, without causing confusion, the terms "uplink control signal" and "uplink control information (UCI)" or "physical uplink control channel (PUCCH)" may be replaced with each other, and terms "uplink data signal" and "uplink data information" or "physical uplink shared channel (PUSCH)" may be replaced with each other.

The terms "downlink control signal" and "downlink control information (DCI)" or "physical downlink control channel (PDCCH)" may be replaced with each other, and the terms "downlink data signal" and "downlink data information" or "physical downlink shared channel (PDSCH)" may be replaced with each other.

In addition, transmitting or receiving a PUSCH may be understood as transmitting or receiving uplink data carried by the PUSCH, transmitting or receiving a PUCCH may be understood as transmitting or receiving uplink information carried by the PUCCH, transmitting or receiving a PRACH may be understood as transmitting or receiving a preamble carried by the PRACH. The uplink signal may include an uplink data signal and/or an uplink control signal, etc., and may be referred to as uplink transmission or uplink information or an uplink channel. Transmitting uplink transmission on an uplink resource may be understood as transmitting the uplink transmission by using the uplink resource. Likewise, downlink data/signal/channel/information may be understood correspondingly.

In the embodiments of this disclosure, higher-layer signaling may be, for example, radio resource control (RRC) signaling; for example, it is referred to an RRC message, which includes an MIB, system information, and a dedicated RRC message; or, it is referred to an as an RRC information element (RRC IE). Higher-layer signaling may also be, for example, medium access control (MAC) signaling, or an MAC control element (MAC CE); however, this disclosure is not limited thereto.

Scenarios in the embodiments of this disclosure shall be described below by way of examples; however, this disclosure is not limited thereto.

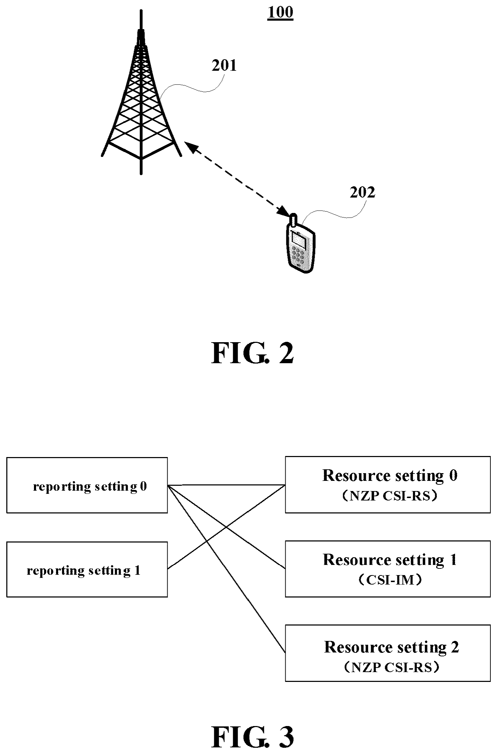

FIG. 2 is a schematic diagram of a communication system of this disclosure, in which a case where a terminal equipment and a network device are taken as examples is schematically shown. As shown in FIG. 2, the communication system 100 may include a network device 201 and a terminal equipment 202 (for the sake of simplicity, an example having only one terminal equipment is schematically given in FIG. 2).

In the embodiment of this disclosure, existing traffics or traffics that may be implemented in the future may be performed between the network device 201 and the terminal equipment 202. For example, such traffics may include but not limited to enhanced mobile broadband (eMBB), massive machine type communication (MTC), and ultra-reliable and low-latency communication (URLLC), etc.

The terminal equipment 202 may transmit data to the network device 201, such as in a grant or grant-free manner. The network device 201 may receive data transmitted by one or more terminal equipments 202, and feed back information to the terminal equipment 202, such as acknowledgement (ACK)/non-acknowledgement (NACK) information, and the terminal equipment 202 may acknowledge to terminate a transmission process, or may perform transmission of new data, or may perform data retransmission.

In the embodiments of this disclosure, reporting may refer to an action of transmitting information by the terminal equipment to the network device. For example, reporting CSI by the terminal equipment may refer to transmitting CSI by the terminal equipment to the network device.

FIG. 3 is a schematic diagram of decoupling by an NR system according to CSI measurement and CSI feedback. As shown in FIG. 3, each terminal equipment may configure N ($N \geq 1$) reporting settings and M ($M \geq 1$) resource settings. Each reporting setting is associated with at least one resource setting for channel measurement and interference measurement. For each bandwidth part (BWP), $N \leq 12$, $M \leq 28$.

The CSI resource settings are used for interference measurement (CSI-IM/NZP CSI-RS) and CSI acquisition (NZP CSI-RS). Each resource setting contains S resource sets, each resource set containing Ks CSI-RS resources.

A mode of CSI reporting is configured as one of AP, P, or SP, wherein the AP mode may include one or more resource sets. When modes P and SP are used for CSI acquisition, only one resource set may be included.

The CSI reporting settings are used to set a CSI report quantity, a CSI type (Type I or Type II), codebook parameter configuration, a CSI reporting time-domain behavior, frequency domain granularities of a precoding matrix indicator (PMI) and a channel quality indicator (CQI), measurement constraint configurations and CSI reporting frequency bands.

The CSI report quantity supported by NR includes: 'none', 'cri-RI-PMI-CQI', 'cri-RI-i1', 'cri-RI-i1-CQI', 'cri-RI-CQI', 'cri-RSRP', 'cri-SINR', 'ssb-Index-RSRP', 'ssb-Index-SINR' or 'cri-RI-LI-PMI-CQI', etc.

The CSI type includes: 'typeI Single-Panel', 'typeI Multi-Panel', 'typeII', 'typeII-PortSelection', 'typeII-r16', 'typeII-PortSelection-r16', 'typeII-PortSelection-r17', etc.

In CSI report based on 'typeII-r16' and 'typeII-PortSelection-r17', only broadband parameter information may only be reported via a physical uplink control channel (PUCCH); and if there exists sub-band codebook parameter information, it may only be reported via a physical uplink shared channel (PUSCH), and part I and part II are included therein, as shown in Table 1 below.

Table 1

| Part I | | Part II |
|---|---|---|
| ● RI (if reported)<br>● CQI<br>● indication of the overall number of non-zero amplitude coefficients across layers<br>3 elements are separately encoded | | ● PMI |

In CSI report based on 'typeII-r16' and 'typeII-PortSelection-r17', Part I information is reported according to priorities, and CSI report is omitted starting from a lowest priority, until a CSI reporting code rate is less than or equal to a code rate configured by a higher-layer parameter maxCodeRate. For example, priorities of the information fields may be as shown in Table 2 below.

Table 2

| CSI report number | CSI fields |
|---|---|
| CSI report #n CSI part 1 | RI, if reported |
| | A wideband CQI of a first codeword, if reported |
| | A sub-band differential CQI of the first codeword, if reported |
| | An indication of the number of non-zero amplitude coefficients $M_0$ of layer 0, if reported |
| | A sum $K^{NZ}$ of non-zero coefficients of all layers, if reported |
| Note: Subbands for given CSI report $n$ indicated by the higher layer parameter *csi-ReportingBand* are numbered continuously in the increasing order with the lowest subband of *csi-ReportingBand* as subband 0. | |

In the following embodiments of this disclosure, the omitting at least a part of CSI may also be referred to as omitting at least a part of CSI or discarding at least a part of CSI, that is, ignoring, omitting and discarding may be replaced with each other, and these three words may all correspond to omit.

Embodiments of a first aspect

In the related art, for example, in the current uplink control information (UCI) report based on 'typeII-r16' and 'typeII-PortSelection-r17', part I reporting domain information and bitwidth in a CSI reporting domain based on CJT joint transmission are not specified, hence, the network device is unable to accurately receive and demodulate the part I information based on the joint coherent transmission scheme. In addition, when the terminal equipment receives all Part I information based on the joint coherent transmission scheme, if a part I information reporting priority is not currently defined and a bit rate is greater than a configured highest bit rate, the network device is unable to omit information according to a definition of the priority, resulting in the inability to correctly receive and demodulate CSI part information, resulting in that a part of information of CSI is unable to be correctly received and demodulated, which greatly affects accuracy and completeness of measurement reporting, and is unable to ensure data transmission performances.

In order to solve at least one of the above problems or other similar problems, the embodiments of the first aspect of this disclosure provide a method for transmitting channel state information, applicable to a terminal equipment. In the following description, the terminal equipment may be, for example, the terminal equipment 202 in FIG. 2, and the network device in communication with the terminal equipment may be, for example, the network device 201 in FIG. 2.

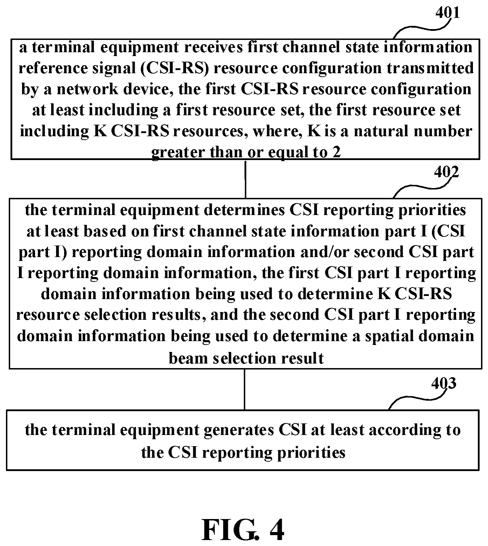

FIG. 4 is a schematic diagram of the method for transmitting channel state information of the embodiments of the first aspect of this disclosure. As shown in FIG. 4, the method includes:

operation 401: a terminal equipment receives first channel state information reference signal (CSI-RS) resource configuration transmitted by a network device, the first CSI-RS resource configuration at least including a first resource set, the first resource set including K CSI-RS resources, where, K is a natural number greater than or equal to 2;

operation 402: the terminal equipment determines CSI reporting priorities at least based on first channel state information part I (CSI part I) reporting domain information and/or second CSI part I reporting domain information, the first CSI part I reporting domain information being used to determine K CSI-RS resource selection results, and the second CSI part I reporting domain information being used to determine a spatial domain beam selection result; and

operation 403: the terminal equipment generates CSI at least according to the CSI reporting priorities.

In this disclosure, the terminal equipment may determine information reporting and measurement of the CSI according to the CSI measurement scheme, which is mode 1 or mode 2, set by higher-layer signaling configuration.

In operation 403, the generating CSI by the terminal equipment at least according to the CSI reporting priorities includes: omitting at least a part of the CSI according to the CSI reporting priorities. For example, when the CSI reporting code rate is greater than or equal to a code rate configured by a higher-layer parameter (e.g. maxCodeRate), the terminal equipment may omit, ignore, or discard a part of the CSI report starting from a lowest priority according to the CSI reporting priorities (such as a CSI part 1 reporting priority), until the CSI reporting code rate is less than or equal to the code rate configured by the higher-layer parameter (such as maxCodeRate).

In some embodiments, the terminal equipment may calculate a channel quality indicator (CQI) at least based on M CSI-RS resources, the CQI being, for example, a part of the CSI.

In some embodiments, the M CSI-RS resources are related to the K CSI-RS resources involved in operation 401, for example, the M CSI-RS resources are M of the K CSI-RS resources.

The M CSI-RS resources are optimal resources in the K CSI-RS resources, for example, the optimal resources include:

a first number of resources with maximum reference signal received power (RSRP), the first number being less than or equal to M; and/or,

a second number of resources with RSRP greater than or equal to a predetermined threshold, the second number being less than or equal to M; and/or,

a former third number of resources with minimum block error rates (BLERs), the third number being less than or equal to M; and/or,

a fourth number of resources with BLERs less than or equal to a predetermined threshold, the fourth number being less than or equal to M.

In operation 402 of this disclosure, the terminal equipment determines the CSI reporting priorities based on the first CSI part I reporting domain information and/or the second CSI part I reporting domain information.

The first CSI part I reporting domain information is used to determine K resource selection results. For example, the first CSI part I reporting domain information may be referred to as "a TRP selection reporting result in a CJT transmission scheme".

The second CSI part I reporting domain information is used to determine a spatial domain beam selection result. For example, the second CSI part I reporting domain information may be referred to as "an SD beam quantity combination reporting result in a CJT transmission scheme".

In some embodiments, the terminal equipment determines the bitwidth of the first CSI part I reporting domain information and/or the bitwidth of the second CSI part I reporting domain information based on the number of bits of a predetermined value.

In some embodiments, the terminal equipment may further determine the CSI reporting priorities based on third CSI part I reporting domain information and/or fourth CSI part I reporting domain information.

The third CSI part I reporting domain information is used to determine an indication of a sum of M non-zero coefficients of all layers. For example, the third CSI part I reporting domain information may be referred to as "an indication of a sum $K^{NZ,i}$ of M non-zero coefficients of all layers".

The fourth CSI part I reporting domain information is used to determine a sum of non-zero coefficients of all layers related to M resources arranged in a predetermined order. For example, the fourth CSI part I reporting domain information is referred to as "an indication of a sum $K^{NZ,i}$ of *i-th* non-zero coefficients of all layers"; where, i is a natural number, and $1 \leq i \leq M$.

In some embodiments, bitwidths of the first CSI part I reporting domain information, the second CSI part I reporting domain information, the third CSI part I reporting domain information and the fourth CSI part I reporting domain information may be as shown in Table 3 below.

Table 3

| Field | Bitwidth |
|---|---|
| TRP selection reporting result in a CJT transmission scheme | $K$ |
| SD beam quantity combination reporting result in a CJT transmission scheme | $\lceil log_2 Nl \rceil$ |

(continued)

| Field | Bitwidth |
|---|---|
| Indication of a sum $K^{NZ,i}$ of M non-zero coefficients of all layers | $M * \lceil \log_2(K_0) \rceil$ if max allowed rank is 1; $M * \lceil \log_2(2K_0) \rceil$ otherwise |
| Indication of a sum $K^{NZ,i}$ of *i-th* non-zero coefficients of all layers | $\lceil \log_2(K_0) \rceil$ if max allowed rank is 1; $\lceil \log_2(2K_0) \rceil$ otherwise |

In some embodiments, corresponding to operation 402, the CSI reporting priorities determined by the terminal equipment are sequentially arranged in a descending order as follows:

the rank indicator (RI), the first CSI part I reporting domain information, the second CSI part I reporting domain information, and the third CSI part I reporting domain information; or
the rank indicator (RI), the first CSI part I reporting domain information, the second CSI part I reporting domain information, and the fourth CSI part I reporting domain information; or
the first CSI part I reporting domain information, the second CSI part I reporting domain information, the rank indicator (RI), and the fourth CSI part I reporting domain information; or
the first CSI part I reporting domain information, the second CSI part I reporting domain information, the rank indicator (RI), and the third CSI part I reporting domain information.

It should be noted that the orders of arranging the priorities listed above are examples only, and this disclosure is not limited thereto. In the CSI reporting priorities, the priorities of the reporting domain information may also be arranged in other orders.

In some embodiments, the terminal equipment also transmits X pieces of fifth CSI part I reporting domain information based on the CSI-RS resources. The CSI-RS resources here refer to the CSI-RS resources in the above M CSI-RS resources,
where, 1 <= X <= M, and X may be configured by higher-layer signaling or may be predefined.

In some embodiments, RI values of the X pieces of fifth CSI part I reporting domain information enable reporting of CSI in multiple transmission schemes.

In some embodiments, in a case where X = M, a first part of information of the X pieces of fifth CSI part I reporting domain information is associated measurement to which all X channel state information reference signals (CSI-RSs) in M correspond, where, *i-th* CSI corresponds to a CSI-RS resource in a bitmap associated with an *i-th* value that is a predetermined value; or

in some embodiments, in a case where X ≤ M,
a first part of information of the X pieces of fifth CSI part I reporting domain information is associated measurement information corresponding to former X CSI-RSs in M; or,
the terminal equipment reports a corresponding association relationship between a first part of information of the X pieces of fifth CSI part I reporting domain information and K CSI-RS resources, wherein the K CSI-RS resources are included in a non-zero power channel state information reference signal (NZP-CSI-RS) resource set; or
the terminal equipment reports a corresponding association relationship between a first part of information of the X pieces of fifth CSI part I reporting domain information and M CSI-RS resources.

Next, the method for transmitting channel state information of this disclosure shall be described from a network device side.

Operation 1-1: the network device may configure a multi-point joint coherent transmission scheme (CJT) and CSI reporting settings via the following higher-layer signaling.

In some embodiments of operation 1-1, RRC higher-layer signaling '*coherent-JTscheme*' may be newly added to configure the multi-point joint coherent transmission scheme (CJT), wherein if *coherent-JTscheme*' = mode 1, it is a mode 1 CSI measurement scheme, and if '*coherent-JTscheme*' = mode 2, it is a mode 2 CSI measurement scheme.

In some other embodiments of operation 1-1, sub-configuration *"typeH-r18-coherentJT'* may be newly added into *'codebookConfig-r18'* to configure a multi-point joint coherent transmission scheme (CJT). For example, sub-configuration '*csi-codebookMode-r18-coherentJT'* = mode 1 may be newly added, hence, it is a mode 1 CSI measurement scheme, and *csi-codebookMode-r18-coherentJT'* = mode 2, hence, it is a mode 2 CSI measurement scheme.

Operation 1-2: the network device configures CSI resource settings by newly adding higher-layer signaling, and receives and measures CSI-RS resources based on CJT transmission.

The resource settings include a non-zero power channel state information reference signal (NZP-CSI-RS) resource set for channel measurement (e.g. which may be referred to as a first resource set), the NZP-CSI-RS resource set including K CSI-RS resources.

Operation 2: the network device receives the CSI reporting information based on the multi-point joint coherent transmission scheme (CJT) of the terminal equipment, wherein the CSI includes part 1 (i.e. CSI part I) and part 2 (i.e. CSI part II).

Operation 3: the network device decodes received CSI part I based on one of the following priority orders 1~4.

Priority order 1:

the RI > a TRP selection reporting result in the CJT transmission scheme (i.e. the first CSI part I reporting domain information) > an SD beam combination reporting result in the CJT transmission scheme (i.e. the second CSI part I reporting domain information) > selecting an indication of a sum of M non-zero coefficients of all layers (i.e. the third CSI part I reporting domain information).

The TRP selection reporting result in the CJT transmission scheme includes a bitmap of K bits.

The SD beam combination reporting result in the CJT transmission scheme has overhead of $\lceil log_2 Nl \rceil$ bits; where, $Nl \geq 1$ is SD beam number combination candidate configuration, which may be configured higher-layer signaling. When, $Nl = 1$, the terminal equipment may not report the SD beam combination information in the CJT transmission scheme,

where, M is the number of values that are '1' in the bitmap in the TRP selection reporting result in the CJT transmission scheme, $K^{NZ,i}$ is a sum of non-zero coefficients of all layers to which an *i-th* CSI-RS resource with a value of '1' associated with the bitmap corresponds, and reporting overhead is $M * \lceil log_2 (K_0) \rceil$; where, $K_0$ is an upper limit of the non-zero coefficients, which is configured by higher-layer signaling.

The above priority order 1 may be as shown in Table 4, and the CSI part I reporting domain information may be as shown in Table 5.

Table 4

| CSI report number | CSI fields |
|---|---|
| CSI report #n<br><br>CSI part 1 | RI, if reported |
| | TRP selection reporting result in the CJT transmission scheme |
| | SD beam number combination reporting result in the CJT transmission scheme, if reported |
| | Wideband CQI of the first TB, if reported |
| | Sub-band differential CQI of the first TB, if reported |
| | Sum $K^{NZ}$ of M non-zero coefficients of all layers, if reported |
| Note: Subbands for given CSI report *n* indicated by the higher layer parameter *csi-ReportingBand* are numbered continuously in the increasing order with the lowest subband of *csi-ReportingBand* as subband 0. | |

Table 5

| Field | Bitwidth |
|---|---|
| RI | $min(2, \lceil log_2 n_{RI} \rceil)$ |
| TRP selection reporting result in the CJT transmission scheme | $K$ |
| SD beam number combination reporting result in the CJT transmission scheme | $\lceil log_2 Nl \rceil$ |
| Wideband CQI | 4 |
| Sub-band differential CQI | 2 |
| Indication of a sum $K^{NZ}$ of non-zero coefficients of M all layers | $M * \lceil log_2 (K_0) \rceil$ if max allowed rank is 1;<br><br>$M * \lceil log_2 (2K_0) \rceil$ otherwise |

Priority order 2:

the RI > a TRP selection reporting result in the CJT transmission scheme > an SD beam combination reporting result in the CJT transmission scheme > selecting a sum of non-zero coefficients of TRP 1 > selecting a sum of non-zero coefficients of TRP 2 >...> selecting a sum of non-zero coefficients of TRP M.

The TRP selection reporting result/SD beam combination reporting result in the CJT transmission scheme is/are identical to those in "priority order 1".

Selecting a sum of non-zero coefficients of TRP 1, selecting a sum of non-zero coefficients of TRP 2,..., selecting a sum of non-zero coefficients of TRP M, correspond to the above X fifth CSI reporting domain information,

where, $K^{NZ,i}$ is a sum of non-zero coefficients of all layers to which an *i-th* CSI-RS resource with a value of '1' associated with the bitmap corresponds, and reporting overhead of $K^{NZ,i}$ is $\lceil \log_2(K_0) \rceil$ ; where, $K_0$ is an upper limit of the non-zero coefficients, which is configured by higher-layer signaling.

In some embodiments, sums $K^{NZ,m}$ of non-zero coefficients of the layers may be equal to each other, for example, $K^{NZ,1} = \cdots = K^{NZ,m}$, hence, reporting overhead may further be saved.

The above priority order 2 and the CSI part I reporting domain information may be as shown in Table 6.

Table 6

| ● CSI report number | CSI fields |
|---|---|
| CSI report #n | CRI, if reported |
| | RI, if reported |
| | TRP selection reporting result in the CJT transmission scheme |
| | SD beam number combination reporting result in the CJT transmission scheme |
| | Wideband CQI of the first codeword, if reported |
| | Sub-band differential CQI of the first codeword, if reported |
| | Indication of the number of a non-zero amplitude coefficient $M_0$ of layer 0, if reported |
| | Indication of the number of a non-zero amplitude coefficient $M_1$ of layer 1, if reported (if RI = 1 is reported, this field will be all 0s) |
| CSI part 1 | Sum $K^{NZ,1}$ of non-zero amplitude coefficients of all layers to which a CSI-RS resource with a value "1" in a bitmap of a TRP selection reporting result in the first CJT transmission scheme corresponds, if reported |
| | ... |
| | Sum $K^{NZ,m}$ of non-zero amplitude coefficients of all layers to which a CSI-RS resource with a value "1" in a bitmap of a TRP selection reporting result in the *M-th* CJT transmission scheme corresponds, if reported |
| Note: Subbands for given CSI report *n* indicated by the higher layer parameter *csi-ReportingBand* are numbered continuously in the increasing order with the lowest subband of *csi-ReportingBand* as subband 0. | |

(continued)

| Field | Bitwidth | |
|---|---|---|
| RI $\quad min(2, \lceil log_2 n_{RI} \rceil)$ | | |
| TRP selection reporting result in the CJT transmission scheme | $K$ | |
| SD beam number combination reporting result in the CJT transmission scheme $\lceil log_2 Nl \rceil$ | | |
| Wideband CQI | 4 | |
| Sub-band differential CQI | 2 | |
| Indication of a sum $K^{NZ,i}$ of $i$-th non-zero coefficients of all layers | $\lceil \log_2(K_0) \rceil$ if max allowed rank is 1; $\lceil \log_2(2K_0) \rceil$ otherwise | |

Priority order 3:
a TRP selection reporting result in the CJT transmission scheme > an SD beam combination reporting result in the CJT transmission scheme > the RI > selecting a sum of non-zero coefficients of TRP 1 > selecting a sum of non-zero coefficients of TRP 2 >...> selecting a sum of non-zero coefficients of TRP M.

The TRP selection reporting result/SD beam combination reporting result in the CJT transmission scheme is/are identical to those in "priority order 1",

where, $K^{NZ,i}$ is a sum of non-zero coefficients of all layers to which an $i$-th CSI-RS resource with a value of '1' associated with the bitmap corresponds.

In some embodiments, a restriction on that sums $K^{NZ,i}$ of non-zero coefficients of all layers are equal may be newly added, for *example,* $K^{NZ,1} = \cdots = K^{NZ,m}$, thereby further saving reporting overhead.

The above priority order 3 and the CSI part I reporting domain information may be as shown in Table 7.

Table 7

| ● CSI report number | CSI fields |
|---|---|
| CSI report #n | CRI, if reported |
| | TRP selection reporting result in the CJT transmission scheme |
| | SD beam number combination reporting result in the CJT transmission scheme |
| | RI, if reported |
| | Wideband CQI of the first codeword, if reported |
| | Sub-band differential CQI of the first codeword, if reported |
| | Indication of the number of a non-zero amplitude coefficient $M_0$ of layer 0, if reported |
| CSI part 1 | Indication of the number of a non-zero amplitude coefficient $M_1$ of layer 1, if reported (if RI=1 is reported, this domain will be all 0s) |
| | Sum $K^{NZ,1}$ of non-zero amplitude coefficients of all layers to which a CSI-RS resource with a value "1" in a bitmap of a TRP selection reporting result in the first CJT transmission scheme corresponds, if reported |
| | ... |
| | Sum $K^{NZ,m}$ of non-zero amplitude coefficients of all layers to which a CSI-RS resource with a value "1" in a bitmap of a TRP selection reporting result in the *M-th* CJT transmission scheme corresponds, if reported |

Note: Subbands for given CSI report *n* indicated by the higher layer parameter *csi-ReportingBand* are numbered continuously in the increasing order with the lowest subband of *csi-ReportingBand* as subband 0.

| Field | Bitwidth |
|---|---|
| RI $\quad min(2, \lceil log_2 n_{RI} \rceil)$ | |
| TRP selection reporting result in the CJT transmission scheme | K |
| SD beam number combination reporting result in the CJT transmission scheme $\lceil log_2 Nl \rceil$ | |
| Wideband CQI | 4 |
| Sub-band differential CQI | 2 |
| Indication of a sum $K^{NZ,i}$ of *i-th* non-zero coefficients of all layers | $\lceil log_2(K_0) \rceil$ if max allowed rank is 1; $\lceil log_2(2K_0) \rceil$ otherwise |

Priority order 4:
TRP selection reporting result in CJT transmission scheme > SD beam combination reporting result in CJT transmission scheme > the RI > selecting a sum of non-zero coefficients of all TRPs.

The TRP selection reporting result in CJT transmission scheme is composed of a bitmap of K bits.

The SD beam combination reporting result in CJT transmission scheme is denoted by a bitmap of log(K) bits, where, M is the number of values of '1' in a bitmap in the TRP selection reporting result in CJT transmission scheme, and $K^{NZ,i}$ is a sum of non-zero coefficients of all layers to which an *i-th* CSI-RS resource with a value of '1' associated with the bitmap corresponds.

The above priority order 4 and the CSI part I reporting domain information may be as shown in Table 8 and Table 9.

Table 8

| CSI report number | CSI fields |
|---|---|
| CSI report #n | TRP selection reporting result in the CJT transmission scheme |
| | SD beam number combination reporting result in the CJT transmission scheme |
| CSI 1 part | RI, if reported |
| | Wideband CQI of the first codeword, if reported |
| | Sub-band differential CQI of the first codeword, if reported |
| | A sum $K^{NZ}$ of $M$ non-zero amplitude coefficients of all layers, if reported |
| Note: Subbands for given CSI report $n$ indicated by the higher layer parameter *csi-ReportingBand* are numbered continuously in the increasing order with the lowest subband of *csi-ReportingBand* as subband 0. ||

Table 9

| Field | Bitwidth |
|---|---|
| RI $min(2, \lceil log_2 n_{RI} \rceil)$ | |
| TRP selection reporting result in the CJT transmission scheme | $K$ |
| SD beam number combination reporting result in the CJT transmission scheme $\lceil log_2 Nl \rceil$ | |
| Wideband CQI | 4 |
| Sub-band differential CQI | 2 |
| Indication of a sum $K^{NZ,i}$ of non-zero coefficients of $M$ all layers $M * \lceil log_2(2K_0) \rceil$ | $M * \lceil log_2(K_0) \rceil$ if max allowed rank is 1; otherwise |

In addition, in some embodiments, the network device may further receive X pieces of fifth CSI part I reporting domain information based on the CSI-RS resources (i.e. X pieces of transmission scheme CSI information based on a single point); where, 1 <= X <= M. In this case, the priority orders of the first CSI part I reporting domain information to the fifth CSI part I reporting domain information may be as shown in Table 10 below.

Table 10

| CSI report number | CSI fields |
|---|---|
| CSI report #n CSI part 1, associated with a CSI-RS set configured as a CJT joint transmission scheme | CRI, if reported |
| | TRP selection reporting result in the CJT transmission scheme |
| | SD beam number combination reporting result in the CJT transmission scheme |
| | RI, if reported |
| | Wideband CQI of the first codeword, if reported |
| | Sub-band differential CQI of the first codeword, if reported |
| | Indication of the number of a non-zero |
| | amplitude coefficient $M_0$ of layer 0, if reported |
| | Indication of the number of a non-zero amplitude coefficient $M_1$ of layer 1, if reported (if RI=1 is reported, this field will be all 0s) |
| | Sum $K^{NZ,1}$ of non-zero amplitude coefficients of all layers, if reported |

(continued)

| CSI report number | CSI fields |
|---|---|
| CSI report #n<br><br>CSI part 1, associated with a first CSI-RS resource with a vlaue "1" in a bitmap of a TRP selection reporting result in a CJT transmission scheme | CRI, if reported |
| | RI, if reported |
| | Wideband CQI of the first codeword, if reported |
| | Sub-band differential CQI of the first codeword, if reported |
| | Indication of the number of a non-zero amplitude coefficient $M_0$ of layer 0, if reported |
| | Indication of the number of a non-zero amplitude coefficient $M_1$ of layer 1, if reported (if RI=1 is reported, this field will be all 0s) |
| | Sum $K^{NZ,1}$ of non-zero amplitude coefficients of all layers, if reported |
| ... | ... |
| CSI report #n<br><br>CSI part 1, associated with an *M-th* CSI-RS resource with a vlaue "1" in a bitmap of a TRP selection reporting result in a CJT transmission scheme | CRI, if reported |
| | RI, if reported |
| | Wideband CQI of the first codeword, if reported |
| | Sub-band differential CQI of the first codeword, if reported |
| | Indication of the number of non-zero amplitude coefficients $M_0$ of layer 0, if reported |
| | Indication of the number of non-zero amplitude coefficients $M_1$ of layer 1, if reported (if RI=1 is reported, this field will be all 0s) |
| | Sum $K^{NZ,1}$ of non-zero amplitude coefficients of all layers, if reported |
| Note: Subbands for given CSI report n indicated by the higher layer parameter *csi-ReportingBand* are numbered continuously in the increasing order with the lowest subband of *csi-ReportingBand* as subband 0. | |

In some embodiments, the RIs in the fifth CSI part I reporting domain information may be equal, hence, CSI information of multiple transmission schemes may be reported.

The method for transmitting channel state information of this disclosure shall be described below from a terminal equipment side.

Operation 1: the terminal equipment determines a multi-point joint coherent transmission scheme (CJT), CSI resource settings and reporting settings and/or that $N_l \geq 1$ is SD beam number combination candidate configuration according to received higher-layer signaling configuration. Reference may be made to relevant explanations of the network device side for specific configuration information.

Operation 2: the terminal equipment receives resources for measuring K CSI-RSs and determines CSI part I information, including but not limited to:

receiving resources for measuring K CSI-RSs by the terminal equipment side to determine M transmission points/CSI-RS resource selection results, wherein the TRP/CSI-RS resource selection reporting results in the CJT transmission scheme are composed of a bitmap of K bits; and

receiving resources for measuring the selected K CSI-RSs by the terminal equipment side, recommending to report a spatial domain joint beam quantity recommendation result, wherein overhead of the spatial domain joint beam quantity recommendation result in the CJT transmission scheme is $\lceil log_2 Nl \rceil$ bits; where, $N_l \geq 1$ is an SD beam quantity combination the candidate configuration, which may be configured by higher-layer signaling; wherein when $N_l = 1$, the terminal equipment may not report the spatial domain joint beam quantity recommendation result.

In operation 2, the configuration information is consistent with that at the network device side.

Operation 3: the terminal equipment receives resources for measuring the selected M CSI-RSs and reports an RI, CQI and a sum of non-zero coefficients of all layers in the CJT transmission scheme based on one of the following methods:

corresponding to the priority order 1 or 4 described for the network device, measuring and reporting a sum $K^{NZ}$ of numbers of non-zero coefficients of all layers to which all resources correspond by the terminal equipment; corresponding to the priority order 2 or 3 described for the network device, measuring and reporting a sum of numbers of non-zero coefficients of all layers to which each of all M resources corresponds by the terminal equipment; where, $K^{NZ,i}$ is a sum of non-zero coefficients of all layers to which an *i-th* CSI-RS resource with a value of '1' associated with the bitmap corresponds.

In some embodiments, a restriction on that sums $K^{NZ,i}$ of non-zero coefficients of all layers are equal may be newly added, for *example,* $K^{NZ,1} = \cdots = K^{NZ,m}$, thereby further saving reporting overhead.

Corresponding to the priority order 1, 2, 3, or 4 at the network device side, the terminal equipment may measure and report the sum $K^{NZ,i}$ of non-zero coefficients of all layers to which all (or each) resources correspond; where, $K^{NZ,1} = \cdots = K^{NZ,m}$.

In some embodiments, the terminal equipment may further report X pieces of CSI part I information (i.e. X pieces of fifth CSI part I reporting domain information) in the single point transmission scheme based on M CSI-RS resources; where, X <= 1 <= M. Optionally, X may be configured by higher-layer signaling or may be predefined.

In some embodiments, the X pieces of CSI part I information in the single point transmission schemes includes but is not limited to the information described in Table 11.

Table 11

| RI, if reported |
| --- |
| Wideband CQI of the first codeword, if reported |
| Sub-band differential CQI of the first codeword, if reported |
| Sum $K^{NZ,1}$ of non-zero amplitude coefficients of all layers, if reported |

In some embodiments, the CSI information of the multiple transmission scheme may be reported by newly adding that RIs in the CSI information of the CJT joint transmission scheme and the single point transmission scheme are equal (i.e. values of RIs of the X pieces of fifth CSI part I reporting domain information are equal).

In some embodiments, the X pieces of CSI part I information may be determined according to one of the following methods:

In a case of X = M, the X pieces of reporting information are measurements with which all X CSI-RSs in M are correspondingly associated, wherein an *i-th* piece of CSI information is correspondingly associated with an *i-th* CSI-RS resource in the bitmap with a value '1';

In a case of X <= M, there are the following methods: method 1, method 2, or method 3:

method 1: the X pieces of reporting information are measurement information with which former X CSI-RSs are correspondingly associated;
method 2: the terminal equipment reports a correspondingly associated relationship between the X pieces of reporting information and K CSI-RS resources, the correspondingly associated relationship being denoted by a bitmap of *k* bits; and
method 3: the terminal equipment reports a correspondingly associated relationship between the X pieces of reporting information and M CSI-RS resources, the correspondingly associated relationship being denoted by a bitmap of M bits.

The methods for transmitting and receiving channel state information in this disclosure shall be further explained in detail by way of examples.

Example 1:

Example 1 shall be explained from the network device side. Priority order 1 or 4 is adopted in Example 1, and this example corresponds to the case where the CSI information in the CJT transmission scheme is reported (i.e. at least one of the first CSI part I reporting domain information and the second CSI part I reporting domain information) and the CSI information in the single point transmission scheme is not reported.

In Example 1, operations of the network device are as follows.

Operation 1-1: the network device configures a multi-point joint coherent transmission scheme (CJT) and CSI reporting settings via the following newly-added higher-layer signaling configuration.

For example, 'coherent JTsscheme' RRC higher-layer signaling may be newly added to configure the multi-point joint coherent transmission scheme (CJT). Table 12 below shows an example.

Table 12

```
MIMOParam-r17 ::= SEQUENCE {
    additionalPCI-ToAddModList-r17       SEQUENCE (SIZE(1..maxNrofAdditionalPCI-r17)) OF
SSB-MTC-AdditionalPCI-r17   OPTIONAL,      -- Need N
    additionalPCI-ToReleaseList-r17       SEQUENCE (SIZE(1..maxNrofAdditionalPCI-r17)) OF AdditionalPCIIndex-r17
OPTIONAL,      -- Need N
    unifiedTCI-StateType-r17              ENUMERATED {separate, joint}
OPTIONAL,      -- Need R
    uplink-PowerControlToAddModList-r17    SEQUENCE (SIZE (1..maxUL-TCI-r17)) OF Uplink-powerControl-r17
OPTIONAL,      -- Need N
    uplink-PowerControlToReleaseList-r17 SEQUENCE (SIZE (1..maxUL-TCI-r17)) OF Uplink-powerControlId-r17
OPTIONAL,      -- Need N
    sfnSchemePDCCH-r17                    ENUMERATED {sfnSchemeA,sfnSchemeB}
OPTIONAL,      -- Need R
    sfnSchemePDSCH-r17                    ENUMERATED {sfnSchemeA,sfnSchemeB}
OPTIONAL      -- Need R
    coherent-JTscheme-r18                 ENUMERATED {mode 1, mode 2}
OPTIONAL,      -- Need R
```

If "coherent-JTscheme" = mode 1, it is a mode 1 CSI measurement scheme, and if "coherent-JTscheme" = mode 2, it is a mode 2 CSI measurement scheme.

For another example, a sub-configuration 'typeII-r18-coherentJT' may be newly added into "codebookConfig-r18" to configure the multi-point joint coherent transmission scheme (CJT). Table 13 below shows an example.

Table 13

```
CodebookConfig-r18::=                    SEQUENCE  {
        codebookType                             CHOICE {
            type2                                    SEQUENCE {
                subType                                  CHOICE {
                    typeII-r18-coherentJT                    SEQUENCE  {
                        csi-codebookMode-r18-coherentJT          ENUMERATED {mode1, mode2}
                        n1-n2-codebookSubsetRestriction-r16      CHOICE {
                            two-one                                  BIT STRING (SIZE (16)),
                            two-two                                  BIT STRING (SIZE (43)),
                            four-one                                 BIT STRING (SIZE (32)),
                            three-two                                BIT STRING (SIZE (59)),
                            six-one                                  BIT STRING (SIZE (48)),
                            four-two                                 BIT STRING (SIZE (75)),
                            eight-one                                BIT STRING (SIZE (64)),
                            four-three                               BIT STRING (SIZE (107)),
                            six-two                                  BIT STRING (SIZE (107)),
                            twelve-one                               BIT STRING (SIZE (96)),
                            four-four                                BIT STRING (SIZE (139)),
                            eight-two                                BIT STRING (SIZE (139)),
                            sixteen-one                              BIT STRING (SIZE (128))
                        },
                        typeII-RI-Restriction-coherentJT         BIT STRING (SIZE(4))
                    }
                },
                numberOfPMI-SubbandsPerCQI-Subband-r16 INTEGER (1..2),
                paramCombination-r18-CJT                 INTEGER (1..8)
            }
        }
    }
}
```

In some embodiments, a sub-configuration 'csi-codebookMode-r18-coherentJT' = mode 1 may be newly added, hence, it is a mode 1 CSI measurement scheme; and if 'csi-codebookMode-r18-coherentJT' = mode 2, it is a mode 2 CSI measurement scheme.

Operation 1-2: the network device configures K=4 CSI-RS resources based on CJT transmission via the following newly-added higher-layer signaling configuration, and configures the following spatial domain beam combination candidate configuration via RRC, as shown in Table 14 below. There are total 8 candidate beam quantity combination configuration methods, namely, $N_l = 8$.

Table 14

| SD-para-combination | CSI-RS resource #1 | CSI-RS resource #2 | CSI-RS resource #3 | CSI-RS resource #4 |
|---|---|---|---|---|
| 0 | 1 | 1 | 1 | 1 |
| 1 | 2 | 2 | 2 | 2 |
| 2 | 1 | 1 | 2 | 2 |

(continued)

| SD-para-combination | CSI-RS resource #1 | CSI-RS resource #2 | CSI-RS resource #3 | CSI-RS resource #4 |
|---|---|---|---|---|
| 3 | 2 | 2 | 2 | 4 |
| 4 | 2 | 2 | 4 | 4 |
| ... | | | | |
| 7 | 4 | 4 | 4 | 4 |

Operation 2: the terminal side receives resources for measuring 4 CSI-RSs, and calculates reporting CSI part I information.

1, 2, and 4 are selected and determined as optimal transmission points/CSI-RS resource selection results by measuring such channel information as large-scale RSRP, wherein the TRP/CSI-RS resource selection reporting results in the CJT transmission scheme is 1101.

The terminal side receives the resources for measuring the three selected CSI-RSs, and recommends to report a spatial domain joint beam quantity recommendation result (such as SD-para-combination#5), i.e. 101, wherein the spatial domain joint beam quantity recommendation result in the CJT transmission scheme is $N_l$; where, $N_l \geq 1$ is an SD beam quantity combination the candidate configuration, which may be configured by higher-layer signaling. Optionally, when $N_l$ = 1, the terminal equipment may not report the spatial domain joint beam quantity recommendation result.

The terminal side receives the resources for measuring the three selected CSI-RSs, and recommends to report RI=2 in the CJT joint transmission scheme and the CQI and report an indication of a sum $K^{NZ,i}$ of non-zero coefficients of all the three layers.

A sum $K^{NZ}$ of non-zero coefficients of all layers to which all/each resource(s) correspond(s) is measured and reported.

Operation 3: the network device side receives the CSI part I information based on the multi-point joint coherent transmission scheme (CJT) of the terminal side, wherein a definition of a bitwidth of each report quantity is as shown in Table 15 below.

Table 15

| Field | Bitwidth |
|---|---|
| RI | $min(2, \lceil log_2 4 \rceil)$ |
| TRP selection reporting result in the CJT transmission scheme | 4 |
| SD beam number combination reporting result in the CJT transmission scheme | $\lceil log_2 8 \rceil$ |
| Wideband CQI | 4 |
| Sub-band differential CQI | 2 |
| Indication of a sum $K^{NZ,i}$ of three non-zero coefficients of all layers | $3 * \lceil log_2(2K_0) \rceil$ |

Operation 4: the network device side omits a part of CSI part I information based on a lowest priority of priority order 1, until a CSI report coderate <= a coderate configured by a higher-layer parameter maxCodeRate.

Priority order 1: the RI > the TRP selection reporting result in the CJT transmission scheme > the SD beam combination reporting result in the CJT transmission scheme > selecting a sum of TRP non-zero coefficients, as shown in Table 16 below.

Table 16

| CSI report number | CSI fields |
|---|---|
| CSI report #n<br><br>CSI part 1 | RI, if reported |
| | TRP selection reporting result in the CJT transmission scheme |
| | SD beam number combination reporting result in the CJT transmission scheme, if reported |
| | Wideband CQI of a first TB, if reported |
| | Subband differential CQI of the first TB, if reported |
| | A sum $K^{NZ}$ of $M$ non-zero coefficients of all layers, if reported |
| Note: Subbands for given CSI report n indicated by the higher layer parameter *csi-ReportingBand* are numbered continuously in the increasing order with the lowest subband of *csi-ReportingBand* as subband 0. | |

Priority order 4: the RI > the TRP selection reporting result in the CJT transmission scheme > the SD beam combination reporting result in the CJT transmission scheme > the RI > selecting a sum of TRP non-zero coefficients, as shown in Table 17 below.

Table 17

| CSI report number | CSI fields |
|---|---|
| CSI report #n<br><br>CSI part 1 | TRP selection reporting result in the CJT transmission scheme |
| | SD beam number combination reporting result in the CJT transmission scheme, if reported |
| | RI, if reported |
| | Wideband CQI of a first TB, if reported |
| | Subband differential CQI of the first TB, if reported |
| | A sum $K^{NZ}$ of $M$ non-zero coefficients of all layers, if reported |
| Note: Subbands for given CSI report n indicated by the higher layer parameter csi-ReportingBand are numbered continuously in the increasing order with the lowest subband of csi-ReportingBand as subband 0. | |

Example 2:

Example 2 shall be explained from the network device side. Priority order 2 or 3 is adopted in Example 2, and this example corresponds to the case where the CSI information in the CJT transmission scheme is reported (i.e. at least one of the first CSI part I reporting domain information and the second CSI part I reporting domain information) and the CSI information in the single point transmission scheme is not reported.

In Example 2, operations of the network device are as follows.

Operation 1-2: the network device configures K=4 CSI-RS resources based on CJT transmission via the following newly-added higher-layer signaling configuration, and configures the following spatial domain beam combination candidate configuration via RRC, as shown in Table 14 below. There are total 8 candidate beam quantity combination configuration methods, namely, $N_l = 8$, as shown in Table 18.

Table 18

| SD-para-combination | CSI-RS resource #1 | CSI-RS resource #2 | CSI-RS resource #3 | CSI-RS resource #4 |
|---|---|---|---|---|
| 0 | 1 | 1 | 1 | 1 |
| 1 | 2 | 2 | 2 | 2 |
| 2 | 1 | 1 | 2 | 2 |
| 3 | 2 | 2 | 2 | 4 |
| 4 | 2 | 2 | 4 | 4 |
| ... | | | | |
| 7 | 4 | 4 | 4 | 4 |

Operation 2: the terminal side receives the resources for measuring the 4 CSI-RSs, and calculating the reporting CSI part I information.

1, 2, and 4 are selected and determined as optimal transmission points/CSI-RS resource selection results by measuring such channel information as large-scale RSRP.

The TRP/CSI-RS resource selection reporting results in the CJT transmission scheme is 1101.

The terminal side receives the resources for measuring the three selected CSI-RSs, and recommends to report a spatial domain joint beam quantity recommendation result (such as SD-para-combination#5), i.e. 101.

The spatial domain joint beam quantity recommendation result in the CJT transmission scheme is $N_I$; where, $N_I \geq$ 1 is an SD beam quantity combination the candidate configuration, which may be configured by higher-layer signaling.

Optionally, when $N_I = 1$, the terminal equipment may not report the spatial domain joint beam quantity recommendation result.

The terminal side receives the resources for measuring the three selected CSI-RSs, and recommends to report RI=2 in the CJT joint transmission scheme and the CQI and report an indication of a sum $K^{NZ,i}$ of non-zero coefficients of all the three layers.

A sum $K^{NZ}$ of non-zero coefficients of all layers to which all/each resource(s) correspond(s) is measured and reported.

Operation 3: the network device side receives the CSI part I information based on the multi-point joint coherent transmission scheme (CJT) of the terminal side, wherein a definition of a bitwidth of each report quantity is as shown in Table 19 below.

Table 19

| Field | Bitwidth |
|---|---|
| RI | $min(2, \lceil log_2 4 \rceil)$ |
| TRP selection reporting result in the CJT transmission scheme | 4 |
| SD beam number combination reporting result in the CJT transmission scheme | $\lceil log_2 8 \rceil$ |
| Wideband CQI | 4 |
| Sub-band differential CQI | 2 |
| Indication of a sum $K^{NZ,i}$ of a first non-zero coefficients of all layers | $\lceil log_2(2K_0) \rceil$ |
| Indication of a sum $K^{NZ,i}$ of a second non-zero coefficients of all layers | $\lceil log_2(2K_0) \rceil$ |
| Indication of a sum $K^{NZ,i}$ of a fourth non-zero coefficients of all layers | $\lceil log_2(2K_0) \rceil$ |

Optionally, a restriction on that sums $K^{NZ,m}$ of non-zero coefficients of all layers are equal may be newly added, for example, $K^{NZ,1} = ... = K^{Nz,m}$, thereby further saving reporting overhead.

In operation 3, a definition of a bitwidth of each report quantity is as shown in Table 20 below.

Table 20

| Field | Bitwidth |
|---|---|
| RI | $min(2, \lceil log_2 4 \rceil)$ |
| TRP selection reporting result in the CJT transmission scheme | 4 |
| SD beam number combination reporting result in the CJT transmission scheme | $\lceil log_2 8 \rceil$ |
| Wideband CQI | 4 |
| Sub-band differential CQI | 2 |
| Indication of a sum $K^{NZ,i}$ of non-zero coefficients of all layers | $\lceil log_2(2K_0) \rceil$ |

Operation 4: the network device side omits a part of CSI part I information based on a lowest priority of priority order 2 or 3, until a CSI report coderate <= a coderate configured by a higher-layer parameter maxCodeRate.

Priority order 2: the RI > the TRP selection reporting result in the CJT transmission scheme > the SD beam combination reporting result in the CJT transmission scheme > selecting a sum of non-zero coefficients of TRP 1 > selecting a sum of non-zero coefficients of TRP 2 > selecting a sum of non-zero coefficients of TRP 4,

where, $K^{NZ,i}$ is a sum of non-zero coefficients of all layers to which an *i-th* CSI-RS resource with a value of '1' associated with the bitmap corresponds, and reporting overhead of $K^{NZ,i}$ is $\lceil \log_2(K_0) \rceil$; where, $K_0$ is an upper limit of the non-zero coefficients, which is configured by higher-layer signaling.

Priority order 2 is as shown in Table 21.

Table 21

| CSI report number | CSI fields |
|---|---|
| CSI report #n<br><br>CSI part 1 | RI, if reported |
| | TRP selection reporting result in the CJT transmission scheme |
| | SD beam number combination reporting result in the CJT transmission scheme, if reported |
| | Wideband CQI of a first TB, if reported |
| | Subband differential CQI of the first TB, if reported |
| | A sum $K^{NZ,1}$ of non-zero coefficients of all layers to which a CSI-RS resource with a value of '1' associated with a bitmap in a TRP selection reporting result in a first CJT transmission schemecorresponds, if reported |
| | A sum $K^{NZ,2}$ of non-zero coefficients of all layers to which a CSI-RS resource with a value of '1' associated with a bitmap in a TRP selection reporting result in a second CJT transmission schemecorresponds, if reported |
| | A sum $K^{NZ,4}$ of non-zero coefficients of all layers to which a CSI-RS resource with a value of '1' associated with a bitmap in a TRP selection reporting result in a fourth CJT transmission schemecorresponds, if reported |
| Note: | Subbands for given CSI report *n* indicated by the higher layer parameter *csi-ReportingBand* are numbered continuously in the increasing order with the lowest subband of *csi-ReportingBand* as subband 0. |

Priority order 3: the TRP selection reporting result in the CJT transmission scheme > the SD beam combination reporting result in the CJT transmission scheme > the RI > selecting a sum of non-zero coefficients of TRP 1 > selecting a sum of non-zero coefficients of TRP 2 >...> selecting a sum of non-zero coefficients of TRP M.

The TRP selection reporting result/the SD beam combination reporting result in the CJT transmission scheme is/are identical to those in Example 1,

where, $K^{NZ,i}$ is a sum of non-zero coefficients of all layers to which an *i-th* CSI-RS resource with a value of '1' associated with the bitmap corresponds, and reporting overhead of $K^{NZ,i}$ is $\lceil \log_2(K_0) \rceil$; where, $K_0$ is an upper limit of the non-zero coefficients, which is configured by higher-layer signaling.

Optionally, a restriction on that sums $K^{NZ,m}$ of non-zero coefficients of all layers are equal may be newly added, for example, $K^{NZ,1} = \cdots = K^{Nz,m}$, thereby further saving reporting overhead.

Priority order 3 is as shown in Table 22.

Table 22

| ● CSI report number | CSI fields |
|---|---|
| CSI report #n | TRP selection reporting result in the CJT transmission scheme |
| | SD beam number combination reporting result in the CJT transmission scheme, if reported |
| | RI, if reported |

(continued)

| ● CSI report number | CSI fields |
|---|---|
| CSI part 1 | Wideband CQI of a first codeword, if reported |
| | Subband differential CQI of the first codeword, if reported |
| | Indication of the number of non-zero amplitude coefficients $M_0$ of layer 0, if reported |
| | Indication of the number of a non-zero amplitude coefficient $M_1$ of layer 1, if reported (if RI=1 is reported, this field will be all 0s) |
| | A sum $K^{NZ,1}$ of non-zero coefficients of all layers to which a CSI-RS resource with a value of '1' associated with a bitmap in a TRP selection reporting result in a first CJT transmission schemecorresponds, if reported |
| | ... |
| | A sum $K^{NZ,m}$ of non-zero coefficients of all layers to which a CSI-RS resource with a value of '1' associated with a bitmap in a TRP selection reporting result in an *M-th* CJT transmission schemecorresponds, if reported |
| Note: | Subbands for given CSI report *n* indicated by the higher layer parameter *csi-ReportingBand* are numbered continuously in the increasing order with the lowest subband of *csi-ReportingBand* as subband 0. |

Example 3:

Example 3 shall be explained from the network device side. Priority order 1 or 4 is adopted in Example 3, and this example corresponds to the case where the CSI information in the CJT transmission scheme is reported (i.e. at least one of the first CSI part I reporting domain information and the second CSI part I reporting domain information) and the CSI information in the single point transmission scheme is reported.

In Example 3, operations of the network device are as follows.

Operation 1-2: the network device configures X = 2 via the following newly-added high layer, that is, the terminal side needs to report CSI+2 pieces of CSI information based on the single point transmission scheme in a CJT transmission scheme .

Operation 1-2: the network device configures K=4 CSI-RS resources based on CJT transmission via the following newly-added high layer, and configures the following spatial domain beam combination candidate configuration via RRC, as shown in a table below. There are total 8 candidate beam quantity combination configuration methods, namely, $N_l = 8$, as shown in Table 23.

Table 23

| SD-para-combination | CSI-RS resource #1 | CSI-RS resource #2 | CSI-RS resource #3 | CSI-RS resource #4 |
|---|---|---|---|---|
| 0 | 1 | 1 | 1 | 1 |
| 1 | 2 | 2 | 2 | 2 |
| 2 | 1 | 1 | 2 | 2 |
| 3 | 2 | 2 | 2 | 4 |
| 4 | 2 | 2 | 4 | 4 |
| ... | | | | |
| 7 | 4 | 4 | 4 | 4 |

Operation 2: the terminal side receives the resources for measuring the 4 CSI-RSs, and calculates the reporting CSI part I information in the CJT transmission scheme.

1, 2, and 4 are selected and determined as optimal transmission points/CSI-RS resource selection results by measuring such channel information as large-scale RSRP, wherein the TRP/CSI-RS resource selection reporting results in the CJT transmission scheme is 1101.

The terminal side receives the resources for measuring the three selected CSI-RSs, and recommends to report a spatial domain joint beam quantity recommendation result (such as SD-para-combination#5), i.e. 101. The spatial domain joint beam quantity recommendation result in the CJT transmission scheme is $N_l$; where, $N_l \geq 1$ is an SD beam quantity combination the candidate configuration, which may be configured by higher-layer signaling. Optionally, when $N_l = 1$, the terminal equipment may not report the spatial domain joint beam quantity recommendation result.

The terminal side receives the resources for measuring the three selected CSI-RSs, and recommends to report RI = 2 in the CJT joint transmission scheme and the CQI and report an indication of a sum $K^{NZ,i}$ of non-zero coefficients of all the three layers.

A sum $K^{NZ}$ of non-zero coefficients of all layers to which all/each resource(s) correspond(s) is measured and reported.

Operation 3: the network device side receives the CSI part I information based on the multi-point joint coherent transmission scheme (CJT) of the terminal side, wherein a definition of a bitwidth of each report quantity is as shown in Table 24 below.

Table 24

| Field | Bitwidth |
|---|---|
| RI | $min(2, \lceil log_2 4 \rceil)$ |
| TRP selection reporting result in the CJT transmission scheme | 4 |
| SD beam number combination reporting result in the CJT transmission scheme | $\lceil log_2 8 \rceil$ |
| Wideband CQI | 4 |
| Sub-band differential CQI | 2 |
| Indication of a sum $K^{NZ,i}$ of three non-zero coefficients of all layers | $3 * \lceil log_2(2K_0) \rceil$ |

In operation 3 of Example 3, the following operations are also performed.

The network device determines to measure and report X pieces of CSI information according to one of the following methods:

method 1: two pieces of reporting information are measurement information with which former 2 CSI-RSs in selected resources 1, 2 and 4 are correspondingly associated;

method 2: the terminal equipment reports a correspondingly associated relationship between two CSI-RS resources and K CSI-RS resources, such as 1001, which indicates that the first and fourth CSI-RS resources in 1, 2 and 4 report the single point transmission scheme; and

method 3: the terminal equipment reports a correspondingly associated relationship between X CSI-RS resources and M CSI-RS resources, such as 101, which indicates that the first and fourth CSI-RS resources 1, 2 and 4 report the single point transmission scheme.

The network device side receives the CSI part I information based on the multi-point single point transmission scheme from the terminal side, wherein a definition of a bitwidth of each CSI in X is as shown in Table 25 below.

Table 25

| Field | Bitwidth |
|---|---|
| RI | $min(2, \lceil log_2 4 \rceil)$ |
| Wideband CQI | 4 |
| Sub-band differential CQI | 2 |
| Indication of a sum $K^{NZ,i}$ of non-zero coefficients of all layers | $\lceil log_2(2K_0) \rceil$ |

CSI information of multiple transmission schemes may be reported by adding that RIs in the CJT joint transmission scheme and the single point transmission scheme are equal, wherein a definition of a bitwidth of each CSI in X is as shown in Table 26 below.

Table 26

| Field | Bitwidth |
|---|---|
| Wideband CQI | 4 |
| Sub-band differential CQI | 2 |
| Indication of a sum $K^{NZ,i}$ of non-zero coefficients of all layers | $\lceil \log_2(2K_0) \rceil$ |

Operation 4: the terminal equipment omitting a part of CSI part I information based on priority order 1, until a CSI report coderate <= a coderate configured by a higher-layer parameter maxCodeRate.

Priority order 1: the RI > the TRP selection reporting result in the CJT transmission scheme > the SD beam combination reporting result in the CJT transmission scheme > selecting a sum of non-zero coefficients of all TRPs.

Priority order 1 is as shown in Table 27 below.

Table 27

| CSI report number | CSI fields |
|---|---|
| CSI report #n<br><br>CSI part 1, associated with a CSI-RS set in the CJT joint transmission scheme | |
| | RI_CJT, if reported |
| | TRP selection reporting result in the CJT transmission scheme |
| | SD beam number combination reporting result in the CJT transmission scheme |
| | Wideband CQI of a first codeword, if reported |
| | Subband differential CQI of the first codeword, if reported |
| | A sum $K^{NZ}$ of $M$ non-zero coefficients of all layers, if reported |
| CSI report #n<br><br>CSI part 1, associated with a first CSI-RS resource with a vlaue "1" in a bitmap of a TRP selection reporting result in the CJT transmission scheme | RI_1, if reported |
| | Wideband CQI of a first codeword, if reported |
| | Subband differential CQI of the first codeword, if reported |
| | A sum $K^{NZ,i}$ of non-zero coefficients of all layers, if reported |
| CSI report #n<br><br>CSI part 1, associated with a fourth CSI-RS resource with a vlaue "1" in a bitmap of a TRP selection reporting result in the CJT transmission scheme | RI_4, if reported |
| | Wideband CQI of a first codeword, if reported |
| | Subband differential CQI of the first codeword, if reported |
| | A sum $K^{NZ,i}$ of non-zero coefficients of all layers, if reported |
| Note: Subbands for given CSI report *n* indicated by the higher layer parameter *csi-ReportingBand* are numbered continuously in the increasing order with the lowest subband of *csi-ReportingBand* as subband 0. | |

Priority order 4: the TRP selection reporting result in the CJT transmission scheme > the SD beam combination reporting result in the CJT transmission scheme > the R I> selecting a sum of all TRP non-zero coefficients

Priority order 4 is as shown in Table 28 below.

Table 28

| CSI report number | CSI fields |
|---|---|
| | |
| CSI report #n | TRP selection reporting result in the CJT transmission scheme |
| | SD beam number combination reporting result in the CJT transmission scheme |
| CSI part 1, associated with a CSI-RS set in the CJT joint transmission scheme | RI_CJT, if reported |
| | Wideband CQI of a first codeword, if reported |
| | Subband differential CQI of the first codeword, if reported |
| | A sum $K^{NZ}$ of $M$ non-zero coefficients of all layers, if reported |
| CSI report #n | RI_1, if reported |
| CSI part 1, associated with a first CSI-RS with a value "1" in a bitmap in the TRP selection reporting result in the CJT transmission scheme | Wideband CQI of a first codeword, if reported |
| | Subband differential CQI of the first codeword, if reported |
| | A sum $K^{NZ,i}$ of non-zero coefficients of all layers, if reported |
| CSI report #n | RI_4, if reported |
| CSI part 1, associated with a fourth CSI-RS with a value "1" in a bitmap in the TRP selection reporting result in the CJT transmission scheme | Wideband CQI of a first codeword, if reported |
| | Subband differential CQI of the first codeword, if reported |
| | A sum $K^{NZ,i}$ of non-zero coefficients of all layers, if reported |
| Note: Subbands for given CSI report n indicated by the higher layer parameter *csi-ReportingBand* are numbered continuously in the increasing order with the lowest subband of *csi-ReportingBand* as subband 0. | |

Example 4:

Example 4 shall be explained from the network device side. Priority order 2 or 3 is adopted in Example 2, and this example corresponds to the case where the CSI information in the CJT transmission scheme is reported (i.e. at least one of the first CSI part I reporting domain information and the second CSI part I reporting domain information) and the CSI information in the single point transmission scheme is reported.

In Example 4, operations of the network device are as follows.

Operation 1-1: the network device configures X = 2 via the following newly-added high layer, that is, the terminal side needs to report CSI+2 pieces of CSI information based on the single point transmission scheme in a CJT transmission scheme .

Operation 1-2: the network device configures K=4 CSI-RS resources based on CJT transmission via the following newly-added high layer, and configures the following spatial domain beam combination candidate configuration via RRC, as shown in a table below. There are total 8 candidate beam quantity combination configuration methods, namely, $N_l$ = 8, as shown in Table 30.

Table 30

| SD-para-combination | CSI-RS resource #1 | CSI-RS resource #2 | CSI-RS resource #3 | CSI-RS resource #4 |
|---|---|---|---|---|
| 0 | 1 | 1 | 1 | 1 |
| 1 | 2 | 2 | 2 | 2 |
| 2 | 1 | 1 | 2 | 2 |
| 3 | 2 | 2 | 2 | 4 |
| 4 | 2 | 2 | 4 | 4 |
| ... | | | | |
| 7 | 4 | 4 | 4 | 4 |

Operation 2: the terminal side receives the resources for measuring the 4 CSI-RSs, and calculates the reporting CSI part I information in the CJT transmission scheme.

1, 2, and 4 are selected and determined as optimal transmission points/CSI-RS resource selection results by measuring such channel information as large-scale RSRP, wherein the TRP/CSI-RS resource selection reporting results in the CJT transmission scheme is 1101.

The terminal side receives the resources for measuring the three selected CSI-RSs, and recommends to report a spatial domain joint beam quantity recommendation result (such as SD-para-combination#5), i.e. 101. Wherein, the spatial domain joint beam quantity recommendation result in the CJT transmission scheme is $N_l$; where, $N_l \geq 1$ is an SD beam quantity combination the candidate configuration, which may be configured by higher-layer signaling.

Optionally, when $N_l = 1$, the terminal equipment may not report the spatial domain joint beam quantity recommendation result.

The terminal side receives the resources for measuring the three selected CSI-RSs, and recommends to report RI = 2 in the CJT joint transmission scheme and the CQI and report an indication of a sum $K^{NZ,i}$ of non-zero coefficients of all the three layers.

A sum $K^{NZ}$ of non-zero coefficients of all layers to which all/each resource(s) correspond(s) is measured and reported.

Operation 3: the network device side receives the CSI part I information based on the multi-point joint coherent transmission scheme (CJT) of the terminal side, wherein a definition of a bitwidth of each report quantity is as shown in Table 31 below.

Table 31

| Field | Bitwidth |
|---|---|
| RI | $min(2, \lceil log_2 4 \rceil)$ |
| TRP selection reporting result in the CJT transmission scheme | 4 |
| SD beam number combination reporting result in the CJT transmission scheme | $\lceil log_2 8 \rceil$ |
| Wideband CQI | 4 |
| Sub-band differential CQI | 2 |
| Indication of a sum $K^{NZ,i}$ of three non-zero coefficients of all layers | $3 * \lceil log_2 (2K_0) \rceil$ |

Operation 3: the network device side receives the CSI part I information based on the single-point transmission of the terminal side, wherein CSI information to which X=2 CSI-RSs correspond is included.

The network device determines to measure and report X pieces of CSI information according to one of the following methods:

method 1: two pieces of reporting information are measurement information with which former 2 CSI-RSs in selected resources 1, 2 and 4 are correspondingly associated;
method 2: the terminal equipment additionally reports a correspondingly associated relationship between two CSI-RS resources and K CSI-RS resources, such as 1001, which indicates that the first and fourth CSI-RS resources in 1, 2 and 4 report the single point transmission scheme; and
method 3: the terminal equipment additionally reports a correspondingly associated relationship between X CSI-RS resources and M CSI-RS resources, such as 101, which indicates that the first and fourth CSI-RS resources 1, 2 and 4 report the single point transmission scheme.

The network device side receives the CSI part I information based on the multi-point single point transmission scheme from the terminal side, wherein a definition of a bitwidth of each CSI in X is as shown in Table 32 below.

Table 32

| Field | Bitwidth |
|---|---|
| RI | $min(2, \lceil log_2 4 \rceil)$ |
| Wideband CQI | 4 |
| Sub-band differential CQI | 2 |

(continued)

| Field | Bitwidth |
|---|---|
| Indication of a sum $K^{NZ,i}$ of non-zero coefficients of all layers | $\lceil \log_2(2K_0) \rceil$ |

CSI information of multiple transmission schemes may be reported by adding that RIs in the CJT joint transmission scheme and the single point transmission scheme are equal, wherein a definition of a bitwidth of each CSI in X is as shown in Table 33 below.

Table 33

| Field | Bitwidth |
|---|---|
| Wideband CQI | 4 |
| Sub-band differential CQI | 2 |
| Indication of a sum $K^{NZ,i}$ of non-zero coefficients of all layers | $\lceil \log_2(2K_0) \rceil$ |

Operation 4: the terminal equipment omits a part of CSI part I information based on priority order 2 or 3 starting from a lowest priroity, until a CSI report coderate <= a coderate configured by a higher-layer parameter maxCodeRate.
Priority order 2: the RI > the TRP selection reporting result in the CJT transmission scheme > the SD beam combination reporting result in the CJT transmission scheme > selecting a sum of non-zero coefficients of TRP 1 > selecting a sum of non-zero coefficients of TRP 2 > selecting a sum of non-zero coefficients of TRP 4,
where, $K^{NZ,i}$ is a sum of non-zero coefficients of all layers to which an $i$-th CSI-RS resource with a value of '1' associated with the bitmap corresponds, and reporting overhead of $K^{NZ,i}$ is $\lceil \log_2(K_0) \rceil$; where, $K_0$ is an upper limit of the non-zero coefficients, which is configured by higher-layer signaling.
Priority order 2 is as shown in Table 34.

Table 34

| CSI report number | CSI fields |
|---|---|
| CSI report #n CSI part 1, associated with a CSI-RS set in the CJT joint transmission scheme | RI, if reported |
| | TRP selection reporting result in the CJT transmission scheme |
| | SD beam number combination reporting result in the CJT transmission scheme, if reported |
| | Wideband CQI of a first TB, if reported |
| | Subband differential CQI of the first TB, if reported |
| | A sum $K^{NZ,1}$ of non-zero coefficients of all layers to which a CSI-RS resource with a value of '1' associated with a bitmap in a TRP selection reporting result in a first CJT transmission scheme corresponds, if reported |
| | A sum $K^{NZ,2}$ of non-zero coefficients of all layers to which a CSI-RS resource with a value of '1' associated with a bitmap in a TRP selection reporting result in a second CJT transmission scheme corresponds, if reported |
| | A sum $K^{NZ,4}$ of non-zero coefficients of all layers to which a CSI-RS resource with a value of '1' associated with a bitmap in a TRP selection reporting result in a fourth CJT transmission scheme corresponds, if reported |

(continued)

| CSI report number | CSI fields |
|---|---|
| CSI report #n<br>CSI part 1, associated with a first CSI-RS with a value "1" in a bitmap in the TRP selection reporting result in the CJT transmission scheme | RI_1, if reported |
| | Wideband CQI of a first codeword, if reported |
| | Subband differential CQI of the first codeword, if reported |
| | A sum $K^{NZ,i}$ of non-zero coefficients of all layers, if reported |
| CSI report #n<br>CSI part 1, associated with a fourth CSI-RS with a value "1" in a bitmap in the TRP selection reporting result in the CJT transmission scheme | RI_4, if reported |
| | Wideband CQI of a first codeword, if reported |
| | Subband differential CQI of the first codeword, if reported |
| | A sum $K^{NZ,i}$ of non-zero coefficients of all layers, if reported |
| Note: | Subbands for given CSI report $n$ indicated by the higher layer parameter *csi-ReportingBand* are numbered continuously in the increasing order with the lowest subband of *csi-ReportingBand* as subband 0. |

Priority order 3: the TRP selection reporting result in the CJT transmission scheme > the SD beam combination reporting result in the CJT transmission scheme > the RI > selecting a sum of non-zero coefficients of TRP 1 > selecting a sum of non-zero coefficients of TRP 2 >...> selecting a sum of non-zero coefficients of TRP M.

The TRP selection reporting result/SD beam combination reporting result in the CJT transmission scheme is/are identical to scheme 1,

where, $K^{NZ,i}$ is a sum of non-zero coefficients of all layers to which an *i-th* CSI-RS resource with a value of '1' associated with the bitmap corresponds, and reporting overhead of $K^{NZ,i}$ is $\lceil \log_2(K_0) \rceil$; where, $K_0$ is an upper limit of the non-zero coefficients, which is configured by higher-layer signaling.

Optionally, a restriction on that sums $K^{NZ,m}$ of non-zero coefficients of all layers are equal may be newly added, for example, $K^{NZ,1} = ... = K^{Nz,m}$, thereby further saving reporting overhead.

Priority order 3 is as shown in Table 35.

Table 35

| CSI report number | CSI fields |
|---|---|
| CSI report #n<br>CSI part 1, associated with a CSI-RS set in the CJT joint transmission scheme | TRP selection reporting result in the CJT transmission scheme |
| | SD beam number combination reporting result in the CJT transmission scheme, if reported |
| | RI_CJT, if reported |
| | Wideband CQI of a first TB, if reported |
| | Subband differential CQI of the first TB, if reported |
| | A sum $K^{NZ,2}$ of non-zero coefficients of all layers to which a CSI-RS resource with a value of '1' associated with a bitmap in a TRP selection reporting result in a first CJT transmission scheme corresponds, if reported |
| | A sum $K^{NZ,2}$ of non-zero coefficients of all layers to which a CSI-RS resource with a value of |

(continued)

| CSI report number | CSI fields |
|---|---|
| | '1' associated with a bitmap in a TRP selection reporting result in a second CJT transmission scheme corresponds, if reported |
| | A sum $K^{NZ,4}$ of non-zero coefficients of all layers to which a CSI-RS resource with a value of '1' associated with a bitmap in a TRP selection reporting result in a fourth CJT transmission scheme corresponds, if reported |
| CSI report #n<br><br>CSI part 1, associated with a first CSI-RS with a value "1" in a bitmap in the TRP selection reporting result in the CJT transmission scheme | RI_1, if reported |
| | Wideband CQI of a first codeword, if reported |
| | Subband differential CQI of the first codeword, if reported |
| | A sum $K^{NZ,i}$ of non-zero coefficients of all layers, if reported |
| CSI report #n<br><br>CSI part 1, associated with a fourth CSI-RS with a value "1" in a bitmap in the TRP selection reporting result in the CJT transmission scheme | RI_4, if reported |
| | Wideband CQI of a first codeword, if reported |
| | Subband differential CQI of the first codeword, if reported |
| | A sum $K^{NZ,i}$ of non-zero coefficients of all layers, if reported |
| Note: | Subbands for given CSI report n indicated by the higher layer parameter *csi-ReportingBand* are numbered continuously in the increasing order with the lowest subband of *csi-ReportingBand* as subband 0. |

According to the embodiment of the first aspect of this disclosure, the network device is enabled to determine the part I reporting domain information and bitwidth in the CSI reporting field based on CJT joint transmission, and accurately receive and demodulate the part I information based on the joint coherent transmission scheme. In addition, when the code rate is greater than the configured maximum code rate at this time, the network device may omit some of the reporting information according to this disclosure, reduce the code rate, ensure correct reception and demodulation of a part of the CSI information, improve the accuracy and completeness of measurement reporting, and ensure data transmission performance.

Embodiments of a second aspect

At least addressed to the same problem as the embodiment of the first aspect, the embodiments of the second aspect of this disclosure provide a method for receiving channel state information, applicable to a network device, corresponding to the embodiment of the first aspect.

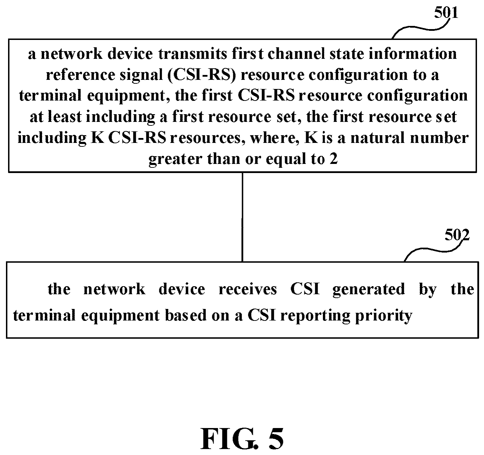

FIG. 5 is a schematic diagram of the method for receiving channel state information of the embodiments of the second aspect. As shown in FIG. 5, the method for receiving channel state information includes:

operation 501: a network device transmits first channel state information reference signal (CSI-RS) resource configuration to a terminal equipment, the first CSI-RS resource configuration at least including a first resource set, the first resource set including K CSI-RS resources, where, K is a natural number greater than or equal to 2; and
operation 502: the network device receives CSI generated by the terminal equipment based on a CSI reporting priority.

In some embodiments, the CSI reporting priority is determined at least based on first channel state information part I (CSI part I) reporting domain information and/or second CSI part I reporting domain information, the first CSI part I reporting domain information being used to determine K CSI-RS resource selection results, and the second CSI part I reporting domain information being used to determine a spatial domain beam selection result.
In some embodiments, the CSI received by the network device is CSI obtained by omitting at least a part of information by the terminal equipment according to the CSI reporting priority.
In some embodiments, a bitwidth/bitwidths of the first CSI part I reporting domain information and/or the second CSI part I reporting domain information is/are determined based on the number of bits of a predetermined value.
In some embodiments, a channel quality indicator (CQI) received by the network device from the terminal equipment is obtained by calculating at least based on M CSI-RS resources, the M CSI-RS resources being related to the K CSI-RS resources.

In some embodiments, the M CSI-RS resources being related to the K CSI-RS resources includes: that the M CSI-RS resources are M CSI-RS resources in the K CSI-RS resources.

In some embodiments, the M CSI-RS resources are following resources in the K CSI-RS resources:

a first number of resources with maximum reference signal received power (RSRP), the first number being less than or equal to M; and/or,

a second number of resources with RSRP greater than or equal to a predetermined threshold, the second number being less than or equal to M; and/or,

a former third number of resources with minimum block error rates (BLERs), the third number being less than or equal to M; and/or,

a fourth number of resources with BLERs less than or equal to a predetermined threshold, the fourth number being less than or equal to M.

In some embodiments, the CSI reporting priority is further determined based on third CSI part I reporting domain information, the third CSI part I reporting domain information being used for determining an indication of a sum of M non-zero coefficients of all layers.

In some embodiments, the CSI reporting priority is further determined based on fourth CSI part I reporting domain information,

the fourth CSI part I reporting domain information being used for determining indication on a sum of non-zero coefficients of all layers related to M resources arranged in a predetermined order.

In some embodiments, the CSI reporting priority in a descending order is as follows:

a rank indicator (RI), the first CSI part I reporting domain information, the second CSI part I reporting domain information, and the third CSI part I reporting domain information; or

a rank indicator (RI), the first CSI part I reporting domain information, the second CSI part I reporting domain information, and the fourth CSI part I reporting domain information; or

the first CSI part I reporting domain information, the second CSI part I reporting domain information, a rank indicator (RI), and the fourth CSI part I reporting domain information; or

the first CSI part I reporting domain information, the second CSI part I reporting domain information, a rank indicator (RI), and the third CSI part I reporting domain information.

In some embodiments, the network device further receives X pieces of fifth CSI part I reporting domain information based on the CSI-RS resources transmitted by the terminal equipment, where, $1 \leq X \leq M$.

In some embodiments, X is configured by higher-layer signaling, or is predefined .

In some embodiments, RI values of the X pieces of fifth CSI part I reporting domain information are equal.

In some embodiments, in a case where X=M, a first part of information of the X pieces of fifth CSI part I reporting domain information is associated measurement to which all X channel state information reference signals (CSI-RSs) in M correspond, where, *i-th* CSI corresponds to a CSI-RS resource in a bitmap associated with an *i-th* value that is a predetermined value; or

in a case where $X \leq M$,

a first part of information of the X pieces of fifth CSI part I reporting domain information is associated measurement information corresponding to former X CSI-RSs in M; or,

the terminal equipment reports a corresponding association relationship between a first part of information of the X pieces of fifth CSI part I reporting domain information and K CSI-RS resources, wherein the K CSI-RS resources are included in a non-zero power channel state information reference signal (NZP-CSI-RS) resource set; or

the terminal equipment reports a corresponding association relationship between a first part of information of the X pieces of fifth CSI part I reporting domain information and M CSI-RS resources.

In some embodiments, the network device transmits higher-layer signaling configuration to the terminal equipment, the higher-layer signaling configuration being used to set a CSI measurement scheme to be mode 1 or mode 2.

Embodiments of a third aspect

At least addressed to the same problem as the embodiment of the first aspect, the embodiments of the third aspect of this disclosure provide an apparatus for transmitting channel state information, applicable to a terminal equipment, corresponding to the embodiment of the first aspect.

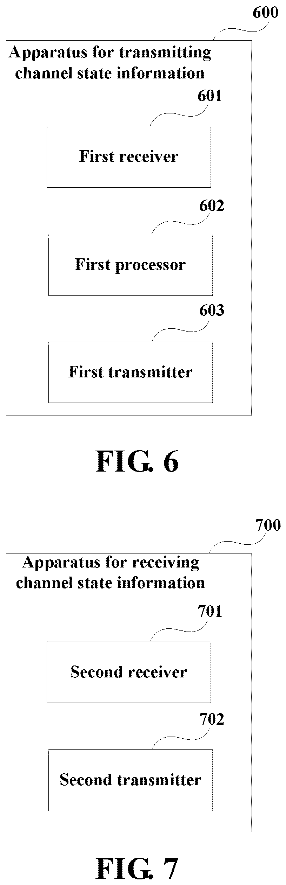

FIG. 6 is a schematic diagram of the apparatus for transmitting channel state information of the embodiments of the third aspect. As shown in FIG. 6, an apparatus 600 for transmitting channel state information includes a first receiver 601, a first processor 602 and a first transmitter 603.

In some embodiments, the first receiver 601 receives first channel state information reference signal (CSI-RS) resource configuration from a network device, the first CSI-RS resource configuration at least including a first resource set, the first resource set including K CSI-RS resources, where, K is a natural number greater than or equal to 2;

and the first processor 602 determines a CSI reporting priority at least based on first channel state information part I (CSI part I) reporting domain information and/or second CSI part I reporting domain information, the first CSI part I reporting domain information being used to determine K CSI-RS resource selection results, and the second CSI part I reporting domain information being used to determine a spatial domain beam selection result, and the first processor 602 further generates CSI at least according to the CSI reporting priority.

The first processor generating CSI at least according to the CSI reporting priority includes:

omitting at least a part of the CSI by the first processor according to the CSI reporting priority.

In some embodiments, the first processor determines a bitwidth/bitwidths of the first CSI part I reporting domain information and/or the second CSI part I reporting domain information based on the number of bits of a predetermined value.

In some embodiments, the first processor calculates a channel quality indicator (CQI) at least based on M CSI-RS resources, the M CSI-RS resources being related to the K CSI-RS resources.

In some embodiments, the M CSI-RS resources being related to the K CSI-RS resources includes:

that the M CSI-RS resources are M CSI-RS resources in the K CSI-RS resources.

In some embodiments, the M CSI-RS resources are following resources in the K CSI-RS resources:

a first number of resources with maximum reference signal received power (RSRP), the first number being less than or equal to M; and/or,

a second number of resources with RSRP greater than or equal to a predetermined threshold, the second number being less than or equal to M; and/or,

a former third number of resources with minimum block error rates (BLERs), the third number being less than or equal to M; and/or,

a fourth number of resources with BLERs less than or equal to a predetermined threshold, the fourth number being less than or equal to M.

In some embodiments, the first processor further determines the CSI reporting priority based on third CSI part I reporting domain information,

the third CSI part I reporting domain information being used for determining an indication of a sum of M non-zero coefficients of all layers.

In some embodiments, the first processor further determines the CSI reporting priority based on fourth CSI part I reporting domain information,

the fourth CSI part I reporting domain information being used for determining indication on a sum of non-zero coefficients of all layers related to M resources arranged in a predetermined order.

In some embodiments, the CSI reporting priority determined by the first processor in a descending order is as follows:

a rank indicator (RI), the first CSI part I reporting domain information, the second CSI part I reporting domain information, and the third CSI part I reporting domain information; or

a rank indicator (RI), the first CSI part I reporting domain information, the second CSI part I reporting domain information, and the fourth CSI part I reporting domain information; or

the first CSI part I reporting domain information, the second CSI part I reporting domain information, a rank indicator (RI), and the fourth CSI part I reporting domain information; or

the first CSI part I reporting domain information, the second CSI part I reporting domain information, a rank indicator (RI), and the third CSI part I reporting domain information.

In some embodiments, the first transmitter transmits X pieces of fifth CSI part I reporting domain information based on the CSI-RS resources; where, 1 <= X <= M.

In some embodiments, X may be configured by higher-layer signaling or may be predefined.

In some embodiments, RI values of the X pieces of fifth CSI part I reporting domain information are equal.

In some embodiments, in a case where X=M, a first part of information of the X pieces of fifth CSI part I reporting domain information is associated measurement to which all X channel state information reference signals (CSI-RSs) in M correspond, where, *i-th* CSI corresponds to a CSI-RS resource in a bitmap associated with an *i-th* value that is a predetermined value; or

in a case where $X \leq M$,
a first part of information of the X pieces of fifth CSI part I reporting domain information is associated measurement information corresponding to former X CSI-RSs in M; or,
the terminal equipment reports a corresponding association relationship between a first part of information of the X pieces of fifth CSI part I reporting domain information and K CSI-RS resources, wherein the K CSI-RS resources are included in a non-zero power channel state information reference signal (NZP-CSI-RS) resource set; or
the terminal equipment reports a corresponding association relationship between a first part of information of the X pieces of fifth CSI part I reporting domain information and M CSI-RS resources.

In some embodiments, the first processor determines information reporting and measurement of the CSI according to a CSI measurement scheme set to be mode 1 or mode 2 by higher-layer signaling configuration.

Embodiments of a fourth aspect

At least addressed to the same problem as the embodiment of the second aspect, the embodiments of the fourth aspect of this disclosure provide an apparatus for receiving channel state information, applicable to a network device, corresponding to the embodiment of the second aspect.

FIG. 7 is a schematic diagram of the apparatus for receiving channel state information of the embodiments of the fourth aspect. As shown in FIG. 7, an apparatus 700 for receiving channel state information includes a second receiver 701 and a second transmitter 702.

The second transmitter 702 transmits first channel state information reference signal (CSI-RS) resource configuration to a terminal equipment, the first CSI-RS resource configuration at least including a first resource set, the first resource set including K CSI-RS resources, where, K is a natural number greater than or equal to 2;
and the second receiver 701 receives CSI generated by the terminal equipment based on a CSI reporting priority.

In some embodiments, the CSI reporting priority is determined at least based on first channel state information part I (CSI part I) reporting domain information and/or second CSI part I reporting domain information, the first CSI part I reporting domain information being used to determine K CSI-RS resource selection results, and the second CSI part I reporting domain information being used to determine a spatial domain beam selection result.

In some embodiments, the CSI received by the second receiver is CSI obtained by omitting at least a part of information by the terminal equipment according to the CSI reporting priority.

In some embodiments, a bitwidth/bitwidths of the first CSI part I reporting domain information and/or the second CSI part I reporting domain information is/are determined based on the number of bits of a predetermined value.

In some embodiments, a channel quality indicator (CQI) received by the second receiver from the terminal equipment is obtained by the terminal equipment by calculating at least based on M CSI-RS resources, the M CSI-RS resources being related to the K CSI-RS resources.

In some embodiments, the M CSI-RS resources being related to the K CSI-RS resources includes:
that the M CSI-RS resources are M CSI-RS resources in the K CSI-RS resources.

In some embodiments, the M CSI-RS resources are following resources in the K CSI-RS resources:

a first number of resources with maximum reference signal received power (RSRP), the first number being less than or equal to M; and/or,
a second number of resources with RSRP greater than or equal to a predetermined threshold, the second number being less than or equal to M; and/or,
a former third number of resources with minimum block error rates (BLERs), the third number being less than or equal to M; and/or,
a fourth number of resources with BLERs less than or equal to a predetermined threshold, the fourth number being less than or equal to M.

In some embodiments, the CSI reporting priority is further determined based on third CSI part I reporting domain information,
the third CSI part I reporting domain information being used for determining an indication of a sum of non-zero coefficients of M all layers.

In some embodiments, the CSI reporting priority is further determined based on fourth CSI part I reporting domain information,
the fourth CSI part I reporting domain information being used for determining indication on a sum of non-zero coefficients of all layers related to M resources arranged in a predetermined order.

In some embodiments, the CSI reporting priority in a descending order is as follows:

a rank indicator (RI), the first CSI part I reporting domain information, the second CSI part I reporting domain information, and the third CSI part I reporting domain information; or
a rank indicator (RI), the first CSI part I reporting domain information, the second CSI part I reporting domain information, and the fourth CSI part I reporting domain information; or
the first CSI part I reporting domain information, the second CSI part I reporting domain information, a rank indicator (RI), and the fourth CSI part I reporting domain information; or
the first CSI part I reporting domain information, the second CSI part I reporting domain information, a rank indicator (RI), and the third CSI part I reporting domain information.

In some embodiments, the network device further receives X pieces of fifth CSI part I reporting domain information based on the CSI-RS resources transmitted by the terminal equipment, where, $1 \leq X \leq M$.

In some embodiments, X is configured by higher-layer signaling, or is predefined .

In some embodiments, RI values of the X pieces of fifth CSI part I reporting domain information are equal.

In some embodiments, in a case where X=M, a first part of information of the X pieces of fifth CSI part I reporting domain information is associated measurement to which all X channel state information reference signals (CSI-RSs) in M correspond, where, *i-th* CSI corresponds to a CSI-RS resource in a bitmap associated with an *i-th* value that is a predetermined value; or

in a case where $X \leq M$,
a first part of information of the X pieces of fifth CSI part I reporting domain information is associated measurement information corresponding to former X CSI-RSs in M; or,
the terminal equipment reports a corresponding association relationship between a first part of information of the X pieces of fifth CSI part I reporting domain information and K CSI-RS resources, wherein the K CSI-RS resources are included in a non-zero power channel state information reference signal (NZP-CSI-RS) resource set; or
the terminal equipment reports a corresponding association relationship between a first part of information of the X pieces of fifth CSI part I reporting domain information and M CSI-RS resources.

In some embodiments, the second transmitter transmits higher-layer signaling configuration to the terminal equipment, the higher-layer signaling configuration being used to set a CSI measurement scheme to be mode 1 or mode 2.

Embodiments of a fifth aspect

The embodiments of the fifth aspect of this disclosure provide a communication system, including a network device and a terminal equipment.

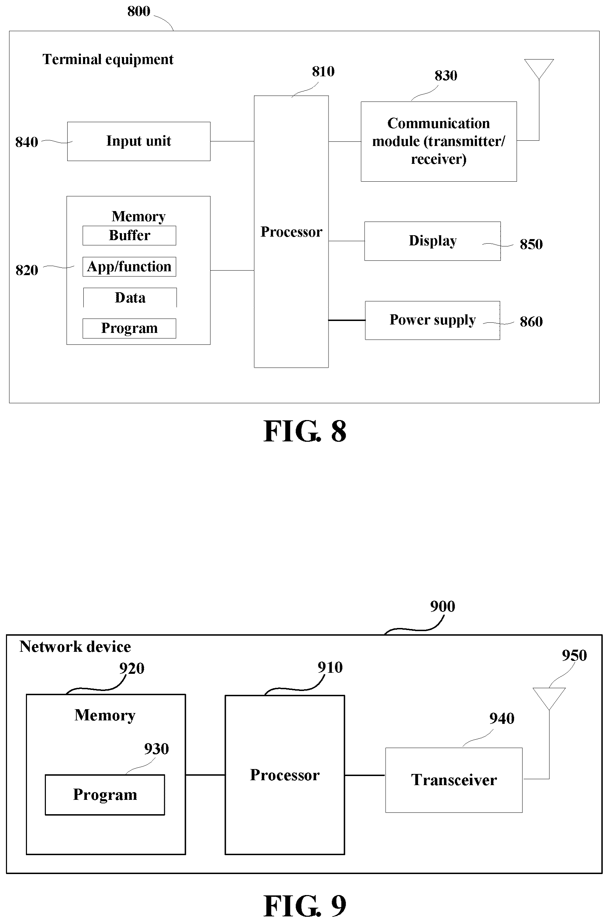

FIG. 8 is a schematic diagram of the terminal equipment of embodiments of the fifth aspect of this disclosure. As shown in FIG. 8, a terminal equipment 800 (such as corresponding to the terminal equipment 202 in FIG. 2) may include a processor 810 and a memory 820, the memory 820 storing data and a program and being coupled to the processor 810. It should be noted that this figure is illustrative only, and other types of structures may also be used, so as to supplement or replace this structure and achieve a telecommunications function or other functions.

For example, the processor 810 may be configured to execute a program to carry out the method described in the embodiment of the first aspect.

As shown in FIG. 8, the terminal equipment 800 may further include a communication module 830, an input unit 840, a display 850, and a power supply 860; wherein functions of the above components are similar to those in the related art, which shall not be described herein any further. It should be noted that the terminal equipment 800 does not necessarily include all the parts shown in FIG. 8, and the above components are not necessary. Furthermore, the terminal equipment 800 may include parts not shown in FIG. 8, and the related art may be referred to.

FIG. 9 is a schematic diagram of the network device of the embodiments of the fifth aspect. As shown in FIG. 9, a network device 900 (such as corresponding to the network device 201 in FIG. 2) may include a processor 910 (such as a central processing unit (CPU) and a memory 920, the memory 920 being coupled to the central processing unit 910. Wherein, the memory 920 may store various data, and furthermore, it may store a program 930 for information processing, and execute the program under control of the central processing unit 910.

For example, the central processing unit 910 may be configured to execute a program to carry out the method described in the embodiment of the first aspect.

Furthermore, as shown in FIG. 9, the network device 900 may include a transceiver 940, and an antenna 950, etc. Wherein, functions of the above components are similar to those in the related art, and shall not be described herein any further. It should be noted that the network device 900 does not necessarily include all the parts shown in FIG. 9, and furthermore, the network device 900 may include parts not shown in FIG. 9, and the related art may be referred to.

An embodiment of this disclosure provides a computer readable program, which, when executed in a terminal equipment, causes the terminal equipment to carry out the method as described in the embodiment of the first aspect.

An embodiment of this disclosure provides a computer storage medium, including a computer readable program, which causes a terminal equipment to carry out the method as described in the embodiment of the first aspect.

The above apparatuses and methods of this disclosure may be implemented by hardware, or by hardware in combination with software. This disclosure relates to such a computer-readable program that when the program is executed by a logic device, the logic device is enabled to carry out the apparatus or components as described above, or to carry out the methods or steps as described above. This disclosure also relates to a storage medium for storing the above program, such as a hard disk, a floppy disk, a CD, a DVD, and a flash memory, etc.

The methods/apparatuses described with reference to the embodiments of this disclosure may be directly embodied as hardware, software modules executed by a processor, or a combination thereof. For example, one or more functional block diagrams and/or one or more combinations of the functional block diagrams shown in the drawings may either correspond to software modules of procedures of a computer program, or correspond to hardware modules. Such software modules may respectively correspond to the steps shown in the drawings. And the hardware module, for example, may be carried out by firming the soft modules by using a field programmable gate array (FPGA).

The soft modules may be located in an RAM, a flash memory, an ROM, an EPROM, an EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile terminal, and may also be stored in a memory card of a pluggable mobile terminal. For example, if equipment (such as a mobile terminal) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in the drawings may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in the drawings may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of the present invention. Various variants and modifications may be made by those skilled in the art according to the spirits and principle of the present invention, and such variants and modifications fall within the scope of the present invention.

As to implementations containing the above embodiments, following supplements are further disclosed.

A method at a terminal equipment side:

1. A method for transmitting channel state information, applicable to a terminal equipment, the method including:

receiving, by the terminal equipment, first channel state information reference signal (CSI-RS) resource configuration transmitted by a network device, the first CSI-RS resource configuration at least including a first resource set, the first resource set including K CSI-RS resources, where, K is a natural number greater than or equal to 2;
determining a CSI reporting priority by the terminal equipment at least based on first channel state information part I (CSI part I) reporting domain information and/or second CSI part I reporting domain information, the first CSI part I reporting domain information being used to determine K CSI-RS resource selection results, and the second CSI part I reporting domain information being used to determine a spatial domain beam selection result; and
generating CSI by the terminal equipment at least according to the CSI reporting priority.

2. The method according to supplement 1, wherein,
the generating CSI by the terminal equipment at least according to the CSI reporting priority includes:
omitting at least a part of the CSI by the terminal equipment according to the CSI reporting priority.

3. The method according to supplement 1, wherein,
the terminal equipment determines a bitwidth/bitwidths of the first CSI part I reporting domain information and/or the second CSI part I reporting domain information based on the number of bits of a predetermined value.

4. The method according to supplement 1, wherein,

the terminal equipment calculates a channel quality indicator (CQI) at least based on M CSI-RS resources, the M CSI-RS resources being related to the K CSI-RS resources.

5. The method according to any one of supplements 1-4, wherein,
the M CSI-RS resources being related to the K CSI-RS resources includes:
that the M CSI-RS resources are M CSI-RS resources in the K CSI-RS resources.

6. The method according to supplement 5, wherein,
the M CSI-RS resources are following resources in the K CSI-RS resources:

a first number of resources with maximum reference signal received power (RSRP), the first number being less than or equal to M; and/or,
a second number of resources with RSRP greater than or equal to a predetermined threshold, the second number being less than or equal to M; and/or,
a former third number of resources with minimum block error rates (BLERs), the third number being less than or equal to M; and/or,
a fourth number of resources with BLERs less than or equal to a predetermined threshold, the fourth number being less than or equal to M.

7. The method according to supplement 4, wherein,

the terminal equipment further determines the CSI reporting priority based on third CSI part I reporting domain information,
the third CSI part I reporting domain information being used for determining an indication of a sum of M non-zero coefficients of all layers.

8. The method according to supplement 4 or 7, wherein,

the terminal equipment further determines the CSI reporting priority based on fourth CSI part I reporting domain information,
the fourth CSI part I reporting domain information being used for determining indication on a sum of non-zero coefficients of all layers related to M resources arranged in a predetermined order.

9. The method according to supplement 8, wherein,
the CSI reporting priority determined by the terminal equipment in a descending order is as follows:

a rank indicator (RI), the first CSI part I reporting domain information, the second CSI part I reporting domain information, and the third CSI part I reporting domain information; or
a rank indicator (RI), the first CSI part I reporting domain information, the second CSI part I reporting domain information, and the fourth CSI part I reporting domain information; or
the first CSI part I reporting domain information, the second CSI part I reporting domain information, a rank indicator (RI), and the fourth CSI part I reporting domain information; or
the first CSI part I reporting domain information, the second CSI part I reporting domain information, a rank indicator (RI), and the third CSI part I reporting domain information.

10. The method according to any one of supplements 1-9, wherein,
the terminal equipment further transmits X pieces of fifth CSI part I reporting domain information based on the CSI-RS resources, where, $1 \leq X \leq M$.

11. The method according to supplement 10, wherein,
X is configured by higher-layer signaling, or is predefined.

12. The method according to supplement 10, wherein,
RI values of the X pieces of fifth CSI part I reporting domain information are equal.

13. The method according to supplement 10, wherein the method further includes:

in a case where X = M, a first part of information of the X pieces of fifth CSI part I reporting domain information is associated measurement to which all X channel state information reference signals (CSI-RSs) in M correspond, where, *i-th* CSI corresponds to a CSI-RS resource in a bitmap associated with an *i-th* value that is a predetermined value; or
in a case where $X \leq M$,
a first part of information of the X pieces of fifth CSI part I reporting domain information is associated measurement information corresponding to former X CSI-RSs in M; or,

the terminal equipment reports a corresponding association relationship between a first part of information of the X pieces of fifth CSI part I reporting domain information and K CSI-RS resources, wherein the K CSI-RS resources are included in a non-zero power channel state information reference signal (NZP-CSI-RS) resource set; or

the terminal equipment reports a corresponding association relationship between a first part of information of the X pieces of fifth CSI part I reporting domain information and M CSI-RS resources.

14. The method according to any one of supplements 1-13, wherein,

the terminal equipment determines information reporting and measurement of the CSI according to a CSI measurement scheme set to be mode 1 or mode 2 by higher-layer signaling configuration.

A method at a network device side:

1. A method for receiving channel state information, applicable to a network device, the method including:

transmitting first channel state information reference signal (CSI-RS) resource configuration by the network device to a terminal equipment, the first CSI-RS resource configuration at least including a first resource set, the first resource set including K CSI-RS resources, where, K is a natural number greater than or equal to 2; and receiving, by the network device, CSI generated by the terminal equipment based on a CSI reporting priority, wherein the CSI reporting priority is determined at least based on first channel state information part I (CSI part I) reporting domain information and/or second CSI part I reporting domain information, the first CSI part I reporting domain information being used to determine K CSI-RS resource selection results, and the second CSI part I reporting domain information being used to determine a spatial domain beam selection result.

2. The method according to supplement 1, wherein,

the CSI received by the network device is CSI obtained by omitting at least a part of information by the terminal equipment according to the CSI reporting priority.

3. The method according to supplement 1, wherein,

a bitwidth/bitwidths of the first CSI part I reporting domain information and/or the second CSI part I reporting domain information is/are determined based on the number of bits of a predetermined value.

4. The method according to supplement 1, wherein,

a channel quality indicator (CQI) received by the network device from the terminal equipment is obtained by calculating at least based on M CSI-RS resources, the M CSI-RS resources being related to the K CSI-RS resources.

5. The method according to any one of supplements 1-4, wherein,

the M CSI-RS resources being related to the K CSI-RS resources includes:

that the M CSI-RS resources are M CSI-RS resources in the K CSI-RS resources.

6. The method according to supplement 5, wherein,

the M CSI-RS resources are following resources in the K CSI-RS resources:

a first number of resources with maximum reference signal received power (RSRP), the first number being less than or equal to M; and/or,

a second number of resources with RSRP greater than or equal to a predetermined threshold, the second number being less than or equal to M; and/or,

a former third number of resources with minimum block error rates (BLERs), the third number being less than or equal to M; and/or,

a fourth number of resources with BLERs less than or equal to a predetermined threshold, the fourth number being less than or equal to M.

7. The method according to supplement 4, wherein,

the CSI reporting priority is further determined based on third CSI part I reporting domain information,

the third CSI part I reporting domain information being used for determining an indication of a sum of M non-zero coefficients of all layers.

8. The method according to supplement 4 or 7, wherein,

the CSI reporting priority is further determined based on fourth CSI part I reporting domain information,

the fourth CSI part I reporting domain information being used for determining indication on a sum of non-zero coefficients of all layers related to M resources arranged in a predetermined order.

9. The method according to supplement 8, wherein,
the CSI reporting priority in a descending order is as follows:

a rank indicator (RI), the first CSI part I reporting domain information, the second CSI part I reporting domain information, and the third CSI part I reporting domain information; or
a rank indicator (RI), the first CSI part I reporting domain information, the second CSI part I reporting domain information, and the fourth CSI part I reporting domain information; or
the first CSI part I reporting domain information, the second CSI part I reporting domain information, a rank indicator (RI), and the fourth CSI part I reporting domain information; or
the first CSI part I reporting domain information, the second CSI part I reporting domain information, a rank indicator (RI), and the third CSI part I reporting domain information.

10. The method according to any one of supplements 1-9, wherein,
the network device further receives X pieces of fifth CSI part I reporting domain information based on the CSI-RS resources transmitted by the terminal equipment, where, $1 \leq X \leq M$.
11. The method according to supplement 10, wherein,
X is configured by higher-layer signaling, or is predefined.
12. The method according to supplement 10, wherein,
RI values of the X pieces of fifth CSI part I reporting domain information are equal.
13. The method according to supplement 10, wherein the method further includes:

in a case where X = M, a first part of information of the X pieces of fifth CSI part I reporting domain information is associated measurement to which all X channel state information reference signals (CSI-RSs) in M correspond, where, *i-th* CSI corresponds to a CSI-RS resource in a bitmap associated with an *i-th* value that is a predetermined value; or
in a case where $X \leq M$,
a first part of information of the X pieces of fifth CSI part I reporting domain information is associated measurement information corresponding to former X CSI-RSs in M; or,
the terminal equipment reports a corresponding association relationship between a first part of information of the X pieces of fifth CSI part I reporting domain information and K CSI-RS resources, wherein the K CSI-RS resources are included in a non-zero power channel state information reference signal (NZP-CSI-RS) resource set; or
the terminal equipment reports a corresponding association relationship between a first part of information of the X pieces of fifth CSI part I reporting domain information and M CSI-RS resources.

14. The method according to any one of supplements 1-13, wherein,
the network device transmits higher-layer signaling configuration to the terminal equipment, the higher-layer signaling configuration being used to set a CSI measurement scheme to be mode 1 or mode 2.

**Claims**

1. An apparatus for transmitting channel state information, applicable to a terminal equipment, the apparatus comprising:

a first receiver configured to receive first channel state information reference signal (CSI-RS) resource configuration from a network device, the first CSI-RS resource configuration at least comprising a first resource set, the first resource set comprising K CSI-RS resources, where, K is a natural number greater than or equal to 2; and
a first processor configured to determine a CSI reporting priority at least based on first channel state information part I (CSI part I) reporting domain information and/or second CSI part I reporting domain information, the first CSI part I reporting domain information being used to determine K CSI-RS resource selection results, and the second CSI part I reporting domain information being used to determine a spatial domain beam selection result, the first processor further generating CSI at least according to the CSI reporting priority.

2. The apparatus according to claim 1, wherein,
the first processor generating CSI at least according to the CSI reporting priority comprises:
omitting at least a part of the CSI by the first processor according to the CSI reporting priority.

**3.** The apparatus according to claim 1, wherein,
the first processor determines a bit width/bit widths of the first CSI part I reporting domain information and/or the second CSI part I reporting domain information based on the number of bits of a predetermined value.

**4.** The apparatus according to claim 1, wherein,
the first processor calculates a channel quality indicator (CQI) at least based on M CSI-RS resources, the M CSI-RS resources being related to the K CSI-RS resources.

**5.** The apparatus according to claim 1, wherein,
the M CSI-RS resources being related to the K CSI-RS resources comprises:
that the M CSI-RS resources are M CSI-RS resources in the K CSI-RS resources.

**6.** The apparatus according to claim 5, wherein,
the M CSI-RS resources are following resources in the K CSI-RS resources:

a first number of resources with maximum reference signal received power (RSRP), the first number being less than or equal to M; and/or,
a second number of resources with RSRP greater than or equal to a predetermined threshold, the second number being less than or equal to M; and/or,
a former third number of resources with minimum block error rates (BLERs), the third number being less than or equal to M; and/or,
a fourth number of resources with BLERs less than or equal to a predetermined threshold, the fourth number being less than or equal to M.

**7.** The apparatus according to claim 4, wherein,

the first processor further determines the CSI reporting priority based on third CSI part I reporting domain information,
the third CSI part I reporting domain information being used for determining an indication of a sum of M non-zero coefficients of all layers.

**8.** The apparatus according to claim 4, wherein,

the first processor further determines the CSI reporting priority based on fourth CSI part I reporting domain information,
the fourth CSI part I reporting domain information being used for determining indication of a sum of non-zero coefficients of all layers related to M CSI-RS resources arranged in a predetermined order.

**9.** The apparatus according to claim 8, wherein,
the CSI reporting priority determined by the first processor in a descending order is as follows:

a rank indicator (RI), the first CSI part I reporting domain information, the second CSI part I reporting domain information, and the third CSI part I reporting domain information; or
a rank indicator (RI), the first CSI part I reporting domain information, the second CSI part I reporting domain information, and the fourth CSI part I reporting domain information; or
the first CSI part I reporting domain information, the second CSI part I reporting domain information, a rank indicator (RI), and the fourth CSI part I reporting domain information; or
the first CSI part I reporting domain information, the second CSI part I reporting domain information, a rank indicator (RI), and the third CSI part I reporting domain information.

**10.** The apparatus according to claim 1, wherein,
the first processor determines information reporting and measurement of the CSI according to a CSI measurement scheme, which is either mode 1 or mode 2, set by a higher-level signaling configuration.

**11.** An apparatus for receiving channel state information, applicable to a network device, the apparatus comprising:

a second transmitter configured to transmit first channel state information reference signal (CSI-RS) resource configuration to a terminal equipment, the first CSI-RS resource configuration at least comprising a first resource set, the first resource set comprising K CSI-RS resources, where, K is a natural number greater than or equal to 2; and

a second receiver configured to receive CSI generated by the terminal equipment based on a CSI reporting priority,

wherein the CSI reporting priority is determined at least based on first channel state information part I (CSI part I) reporting domain information and/or second CSI part I reporting domain information, the first CSI part I reporting domain information being used to determine K CSI-RS resource selection results, and the second CSI part I reporting domain information being used to determine a spatial domain beam selection result.

**12.** The apparatus according to claim 11, wherein,
the CSI received by the second receiver is CSI obtained by omitting at least a part of information by the terminal equipment according to the CSI reporting priority.

**13.** The apparatus according to claim 11, wherein,
a bit width/bit widths of the first CSI part I reporting domain information and/or the second CSI part I reporting domain information is/are determined based on the number of bits of a predetermined value.

**14.** The apparatus according to claim 11, wherein,
a channel quality indicator (CQI) received by the second receiver from the terminal equipment is obtained by the terminal equipment by calculating at least based on M CSI-RS resources, the M CSI-RS resources being related to the K CSI-RS resources.

**15.** The apparatus according to claim 11, wherein,
the M CSI-RS resources being related to the K CSI-RS resources comprises:
that the M CSI-RS resources are M CSI-RS resources in the K CSI-RS resources.

**16.** The apparatus according to claim 15, wherein,
the M CSI-RS resources are following resources in the K CSI-RS resources:

a first number of resources with maximum reference signal received power (RSRP), the first number being less than or equal to M; and/or,
a second number of resources with RSRP greater than or equal to a predetermined threshold, the second number being less than or equal to M; and/or,
a former third number of resources with minimum block error rates (BLERs), the third number being less than or equal to M; and/or,
a fourth number of resources with BLERs less than or equal to a predetermined threshold, the fourth number being less than or equal to M.

**17.** The apparatus according to claim 14, wherein,

the CSI reporting priority is further determined based on third CSI part I reporting domain information,
the third CSI part I reporting domain information being used for determining an indication of a sum of M non-zero coefficients of all layers.

**18.** The apparatus according to claim 14, wherein,

the CSI reporting priority is further determined based on fourth CSI part I reporting domain information,
the fourth CSI part I reporting domain information being used for determining indication of a sum of non-zero coefficients of all layers related to M resources arranged in a predetermined order.

**19.** The apparatus according to claim 18, wherein,
the CSI reporting priority in a descending order is as follows:

a rank indicator (RI), the first CSI part I reporting domain information, the second CSI part I reporting domain information, and the third CSI part I reporting domain information; or
a rank indicator (RI), the first CSI part I reporting domain information, the second CSI part I reporting domain information, and the fourth CSI part I reporting domain information; or
the first CSI part I reporting domain information, the second CSI part I reporting domain information, a rank indicator (RI), and the fourth CSI part I reporting domain information; or

the first CSI part I reporting domain information, the second CSI part I reporting domain information, a rank indicator (RI), and the third CSI part I reporting domain information.

20. The apparatus according to claim 11, wherein,

the second transmitter transmits higher-layer signaling configuration to the terminal equipment, the higher-layer signaling configuration being used to set a CSI measurement scheme to be mode 1 or mode 2.

(A)

Transmission point 1 — Layers 1-4 — Transmission point 2

(B)

Transmission point 1 — Layers 1-4 — Layers 1-4 — Transmission point 2

(C)

Transmission point 1 — Layers 1-2 — Layers 3-4 — Transmission point 2

## FIG. 1

**FIG. 2**

**FIG. 3**

401

a terminal equipment receives first channel state information reference signal (CSI-RS) resource configuration transmitted by a network device, the first CSI-RS resource configuration at least including a first resource set, the first resource set including K CSI-RS resources, where, K is a natural number greater than or equal to 2

402

the terminal equipment determines CSI reporting priorities at least based on first channel state information part I (CSI part I) reporting domain information and/or second CSI part I reporting domain information, the first CSI part I reporting domain information being used to determine K CSI-RS resource selection results, and the second CSI part I reporting domain information being used to determine a spatial domain beam selection result

403

the terminal equipment generates CSI at least according to the CSI reporting priorities

FIG. 4

501

a network device transmits first channel state information reference signal (CSI-RS) resource configuration to a terminal equipment, the first CSI-RS resource configuration at least including a first resource set, the first resource set including K CSI-RS resources, where, K is a natural number greater than or equal to 2

502

the network device receives CSI generated by the terminal equipment based on a CSI reporting priority

**FIG. 5**

600

## Apparatus for transmitting channel state information

601

First receiver

602

First processor

603

First transmitter

## FIG. 6

700

## Apparatus for receiving channel state information

701

Second receiver

702

Second transmitter

## FIG. 7

800

Terminal equipment

810

830

840 — Input unit

Communication
module (transmitter/
receiver)

Processor

Memory
Buffer
820 — App/function
Data
Program

Display — 850

Power supply — 860

FIG. 8

900

Network device

950

920

910

Memory

930

Program

Processor

940

Transceiver

FIG. 9

## INTERNATIONAL SEARCH REPORT

| | International application No. |
|---|---|
| | **PCT/CN2023/076838** |

### A. CLASSIFICATION OF SUBJECT MATTER

H04W 72/542(2023.01)i

According to International Patent Classification (IPC) or to both national classification and IPC

### B. FIELDS SEARCHED

Minimum documentation searched (classification system followed by classification symbols)

IPC:H04W H04Q

Documentation searched other than minimum documentation to the extent that such documents are included in the fields searched

Electronic data base consulted during the international search (name of data base and, where practicable, search terms used)

CNPAT; CNKI; WPI; EPODOC; 3GPP: 信道状态, CSI, 参考信号, RS, 配置, configur+, 报告, 上报, report+, 优先级, priority, 资源, resource, 波束, beam, 选择, select+, 略, 丢弃, omit+, discard+, abandon+

### C. DOCUMENTS CONSIDERED TO BE RELEVANT

| Category* | Citation of document, with indication, where appropriate, of the relevant passages | Relevant to claim No. |
|---|---|---|
| X | CN 115176429 A (QUALCOMM INC.) 11 October 2022 (2022-10-11) description, paragraphs 31-97 | 1-20 |
| X | CN 109803289 A (HUAWEI TECHNOLOGIES CO., LTD.) 24 May 2019 (2019-05-24) description, paragraphs 70-152 | 1-20 |
| A | CN 114503449 A (SAMSUNG ELECTRONICS CO., LTD.) 13 May 2022 (2022-05-13) entire document | 1-20 |
| A | WO 2019157958 A1 (ZTE CORP.) 22 August 2019 (2019-08-22) entire document | 1-20 |
| A | SAMSUNG. "Aperiodic beam reporting" *3GPP TSG RAN WG1 Meeting AH 1801, R1-1800433*, 26 January 2018 (2018-01-26), entire document | 1-20 |

☐ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **10 March 2023** | **17 March 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

International application No.

**PCT/CN2023/076838**

| Patent document cited in search report | | | Publication date (day/month/year) | Patent family member(s) | | | Publication date (day/month/year) |
|---|---|---|---|---|---|---|---|
| CN | 115176429 | A | 11 October 2022 | WO | 2021174378 | A1 | 10 September 2021 |
| | | | | IN | 202227043044 | A | 07 October 2022 |
| CN | 109803289 | A | 24 May 2019 | WO | 2019096266 | A1 | 23 May 2019 |
| CN | 114503449 | A | 13 May 2022 | US | 2022360308 | A1 | 10 November 2022 |
| | | | | WO | 2021066497 | A1 | 08 April 2021 |
| | | | | KR | 20220075397 | A | 08 June 2022 |
| | | | | US | 2021099211 | A1 | 01 April 2021 |
| WO | 2019157958 | A1 | 22 August 2019 | CN | 109302272 | A | 01 February 2019 |
| | | | | EP | 3754884 | A1 | 23 December 2020 |
| | | | | US | 2020403677 | A1 | 24 December 2020 |
| | | | | VN | 75754 | A | 25 February 2021 |
| | | | | RU | 2748854 | C1 | 01 June 2021 |
| | | | | US | 2022407577 | A1 | 22 December 2022 |

Form PCT/ISA/210 (patent family annex) (July 2022)